(19) **Europäisches Patentamt**
**European Patent Office**
**Office européen des brevets**

(11) **EP 4 711 845 A1**

(12) **EUROPEAN PATENT APPLICATION**
published in accordance with Art. 153(4) EPC

(43) Date of publication:
**18.03.2026 Bulletin 2026/12**

(21) Application number: **24823585.5**

(22) Date of filing: **13.05.2024**

(51) International Patent Classification (IPC):
*G03B 17/12* (2021.01)     *G03B 5/06* (2021.01)
*G03B 13/36* (2021.01)     *G03B 11/00* (2021.01)
*H04N 23/55* (2023.01)     *H04N 23/68* (2023.01)
*H04N 23/67* (2023.01)     *G02B 13/00* (2006.01)
*G02B 5/20* (2006.01)

(52) Cooperative Patent Classification (CPC):
**G02B 5/20; G02B 13/00; G03B 5/06; G03B 11/00;
G03B 13/36; G03B 17/12; H04N 23/55;
H04N 23/67; H04N 23/68**

(86) International application number:
**PCT/KR2024/006485**

(87) International publication number:
**WO 2024/258064 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 KR 20230075777
29.06.2023 KR 20230084473**

(71) Applicant: **Samsung Electronics Co., Ltd.
Suwon-si, Gyeonggi-do 16677 (KR)**

(72) Inventor: **BAE, Jaecheol
Suwon-si Gyeonggi-do 16677 (KR)**

(74) Representative: **HGF
HGF Limited
4th Floor, 1 City Square
Leeds LS1 2ES (GB)**

(54) **IMAGING DEVICE AND ELECTRONIC DEVICE INCLUDING SAME**

(57)    An imaging device, according to one embodiment of the present disclosure, includes: a lens assembly comprising at least four lenses sequentially arranged in the optical axis direction, the at least four lenses including a first lens disposed first in the incident direction of light and having positive refractive power, a second lens disposed second in the incident direction of light and having positive refractive power, a third lens disposed third in the incident direction of light, and a fourth lens disposed fourth in the incident direction of light; and an optical member configured to reflect, at least once, the light focused or guided by the lens assembly, so as to guide the light in a direction crossing the optical axis, and satisfies the conditions presented in the disclosed embodiment(s). Other various embodiments may also be possible.

FIG. 8

**Description**

[Technical Field]

An embodiment or embodiments of the disclosure relate to an electronic device, for example, a display device and/or an electronic device including the same.

[Background Art]

The term electronic device" may refer to a device that performs a predetermined function based on an installed program, such as a home appliance, an electronic scheduler, a portable multimedia player, a mobile communication terminal, a tablet PC, a video/audio device, a desktop/laptop PC, and/or a vehicle navigation system. For example, these electronic devices may output stored information as sound or images. As the degree of integration of electronic devices increases and ultra-high-speed and high-capacity wireless communication become more widespread, a single electronic device, such as a mobile communication terminal, may be now equipped with various functions. For example, not only communication functions but also entertainment functions such as gaming, multimedia functions such as music and video playback, communication and security functions for mobile banking, and/or functions of schedule management or electronic wallet are being integrated into a single electronic device.

With the development of digital camera manufacturing technology, electronic devices equipped with downsized and lightened camera modules have been commercialized. As an electronic device that is generally carried at all times (e.g., a mobile communication terminal) is equipped with a camera module (e.g., an imaging device), it becomes possible for a user to easily utilize various functions such as video call and/or augmented reality as well as to take a picture or video.

The above-described information may be provided as related art for the purpose of assisting in understanding the disclosure. None of the above contents make an assertion or decision as to whether any of the above might be applicable as prior art with regard to the disclosure.

[Detailed Description of the Invention]

[Technical Solution]

According to an embodiment of the disclosure, an imaging device includes a lens assembly including at least four lenses sequentially arranged along an optical axis. The at least four lenses include a first lens disposed first in an incident direction of light and having a positive refractive power, a second lens disposed second in the incident direction of light and having a positive refractive power, a third lens disposed third in the incident direction of light, and a fourth lens disposed fourth in the incident direction of light. The imaging device further includes an optical member configured to guide light, which is focused or guided by the lens assembly, in a direction intersecting the optical axis by reflecting the light at least once. In an embodiment, the lens assembly satisfies the following Conditional Expression 1:

$$[\text{Conditional Expression 1}]$$
$$-0.9 < ((f12 / (V1 + V2) + f34 / (V3 + V4)) / Vp) \times 100 < -0.5$$

Here, "f12" denotes a combined focal length of the first lens and the second lens, "f34" denotes a combined focal length of the third lens and the fourth lens, "V1" denotes an Abbe number of the first lens, "V2" denotes an Abbe number of the second lens, "V3" denotes an Abbe number of the third lens, "V4" denotes an Abbe number of the fourth lens, and "Vp" denotes an Abbe number of the optical member.

According to an embodiment of the disclosure, an electronic device includes an imaging device including a lens assembly having at least four lenses sequentially arranged along an optical axis, and an optical member configured to guide light, which is focused or guided by the lens assembly, in a direction intersecting the optical axis by reflecting the light at least once. The electronic device further includes a processor configured to acquire a subject image using the imaging device. In an embodiment, the at least four lenses include a first lens disposed first in an incident direction of light and having a positive refractive power, a second lens disposed second in the incident direction of light and having a positive refractive power, a third lens disposed third in the incident direction of light and having a negative refractive power, and a fourth lens disposed fourth in the incident direction of light. In an embodiment, the lens assembly satisfies the following Conditional Expression 1:

[Conditional Expression 1]

$$-0.9 < ((f12 / (V1 + V2) + f34 / (V3 + V4)) / Vp) \times 100 < -0.5$$

Here, "f12" denotes a combined focal length of the first lens and the second lens, "f34" denotes a combined focal length of the third lens and the fourth lens, "V1" denotes an Abbe number of the first lens, "V2" denotes an Abbe number of the second lens, "V3" denotes an Abbe number of the third lens, "V4" denotes an Abbe number of the fourth lens, and "Vp" denotes an Abbe number of the optical member.

[Brief Description of Drawings]

The above and other aspects, features, and/or advantages of an embodiment of the disclosure will be more apparent from the following detailed description taken with reference to the accompanying drawings.

FIG. 1 is a block diagram illustrating an electronic device in a network environment according to an embodiment of the disclosure.

FIG. 2 is a front perspective view of an electronic device according to an embodiment of the disclosure.

FIG. 3 is a rear perspective view of the electronic device according to an embodiment of the disclosure illustrated in FIG. 2.

FIG. 4 is an exploded perspective view illustrating the electronic device illustrated in FIG. 2 according to an embodiment of the disclosure.

FIG. 5 is a plan view illustrating the rear surface of the electronic device according to an embodiment of the disclosure.

FIG. 6 is a cross-sectional view of a portion of the electronic device according to an embodiment of the disclosure taken along line A-A' of FIG. 5.

FIG. 7 is a configuration view exemplifying an optical path of a camera module in the electronic device according to an embodiment of the disclosure.

FIG. 8 is a view illustrating an imaging device according to an embodiment of the disclosure.

FIG. 9 is a graph illustrating the spherical aberration of the imaging device of FIG. 8 according to an embodiment of the disclosure.

FIG. 10 is a graph illustrating the astigmatism of the imaging device of FIG. 8 according to an embodiment of the disclosure.

FIG. 11 is a graph illustrating the distortion of the imaging device of FIG. 8 according to an embodiment of the disclosure.

FIG. 12 is a view illustrating an imaging device according to an embodiment of the disclosure.

FIG. 13 is a graph illustrating the spherical aberration of the imaging device of FIG. 12 according to an embodiment of the disclosure.

FIG. 14 is a graph illustrating the astigmatism of the imaging device of FIG. 12 according to an embodiment of the disclosure.

FIG. 15 is a graph illustrating the distortion of the imaging device of FIG. 12 according to an embodiment of the disclosure.

FIG. 16 is a view illustrating an imaging device according to an embodiment of the disclosure.

FIG. 17 is a graph illustrating the spherical aberration of the imaging device of FIG. 16 according to an embodiment of the disclosure.

FIG. 18 is a graph illustrating the astigmatism of the imaging device of FIG. 16 according to an embodiment of the disclosure.

FIG. 19 is a graph illustrating the distortion of the imaging device of FIG. 16 according to an embodiment of the disclosure.

FIG. 20 is a view illustrating an imaging device according to an embodiment of the disclosure.

FIG. 21 is a graph illustrating the spherical aberration of the imaging device of FIG. 20 according to an embodiment of the disclosure.

FIG. 22 is a graph illustrating the astigmatism of the imaging device of FIG. 20 according to an embodiment of the disclosure.

FIG. 23 is a graph illustrating the distortion of the imaging device of FIG. 20 according to an embodiment of the disclosure.

FIG. 24 is a view illustrating an imaging device according to an embodiment of the disclosure.

FIG. 25 is a graph illustrating the spherical aberration of the imaging device of FIG. 24 according to an embodiment of the disclosure.

FIG. 26 is a graph illustrating the astigmatism of the imaging device of FIG. 24 according to an embodiment of the disclosure.

FIG. 27 is a graph illustrating the distortion of the imaging device of FIG. 24 according to an embodiment of the disclosure.

FIG. 28 is a view illustrating an imaging device according to an embodiment of the disclosure.

FIG. 29 is a graph illustrating the spherical aberration of the imaging device of FIG. 28 according to an embodiment of the disclosure.

FIG. 30 is a graph illustrating the astigmatism of the imaging device of FIG. 28 according to an embodiment of the disclosure.

FIG. 31 is a graph illustrating the distortion of the imaging device of FIG. 28 according to an embodiment of the disclosure.

FIG. 32 is a view illustrating an imaging device according to an embodiment of the disclosure.

FIG. 33 is a graph illustrating the spherical aberration of the imaging device of FIG. 32 according to an embodiment of the disclosure.

FIG. 34 is a graph illustrating the astigmatism of the imaging device of FIG. 32 according to an embodiment of the disclosure.

FIG. 35 is a graph illustrating the distortion of the imaging device of FIG. 32 according to an embodiment of the disclosure.

FIG. 36 is a view illustrating an imaging device according to an embodiment of the disclosure.

FIG. 37 is a graph illustrating the spherical aberration of the imaging device of FIG. 36 according to an embodiment of the disclosure.

FIG. 38 is a graph illustrating the astigmatism of the imaging device of FIG. 36 according to an embodiment of the disclosure.

FIG. 39 is a graph illustrating the distortion of the imaging device of FIG. 36 according to an embodiment of the disclosure.

FIG. 40 is a view illustrating an imaging device according to an embodiment of the disclosure.

FIG. 41 is a view illustrating an imaging device according to an embodiment of the disclosure.

Throughout the appended drawings, like reference numerals may be assigned to like components, configurations, and/or structures.

[Mode for Carrying out the Invention]

As electronic devices become smaller and lighter, the electronic devices may be more convenient to carry. In an environment where a display is enlarged so that a larger screen can be enjoyed even in a portable electronic device, the electronic device may be downsized and lightened by reducing the thickness thereof. In a miniaturized electronic device, it may be difficult to mount an imaging device having good optical performance. For example, as the number or size of lenses increases, it may be easier to ensure the optical performance of the imaging device, but the degree of design freedom for arranging one or more lenses or an image sensor may be reduced in a miniaturized electronic device. When an optical member such as a mirror or a prism is arranged, it may become easier to arrange the one or more lenses or the image sensor. However, when an additional optical member is arranged, chromatic aberration may increase, and there may be difficulties in selecting a refractive power or material (e.g., Abbe number) for correcting the chromatic aberration.

An embodiment of the disclosure is intended to at least address the above-described problems and/or disadvantages and to provide at least the advantages described below, and may provide an imaging device having improved design flexibility and/or an electronic device including the same.

An embodiment of the disclosure may provide an imaging device that enables chromatic aberration correction while maintaining a degree of design flexibility suitable for a miniaturized electronic device.

The technical subjects pursued in the disclosure may not be limited to the above-mentioned subjects, and other technical subjects which are not mentioned herein may be clearly understood from the following description by those skilled in the art to which the disclosure pertains.

The following description made with reference to the accompanying drawings may provide an understanding of various exemplary implementations of the disclosure including the claims and equivalents thereof. An exemplary embodiment set forth in the following description includes various particular details to help the understanding, but is considered one of various exemplary embodiments. Therefore, it will be apparent to those skilled in the art that various changes and modifications may be made to various implementations described herein without departing from the scope and technical idea of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

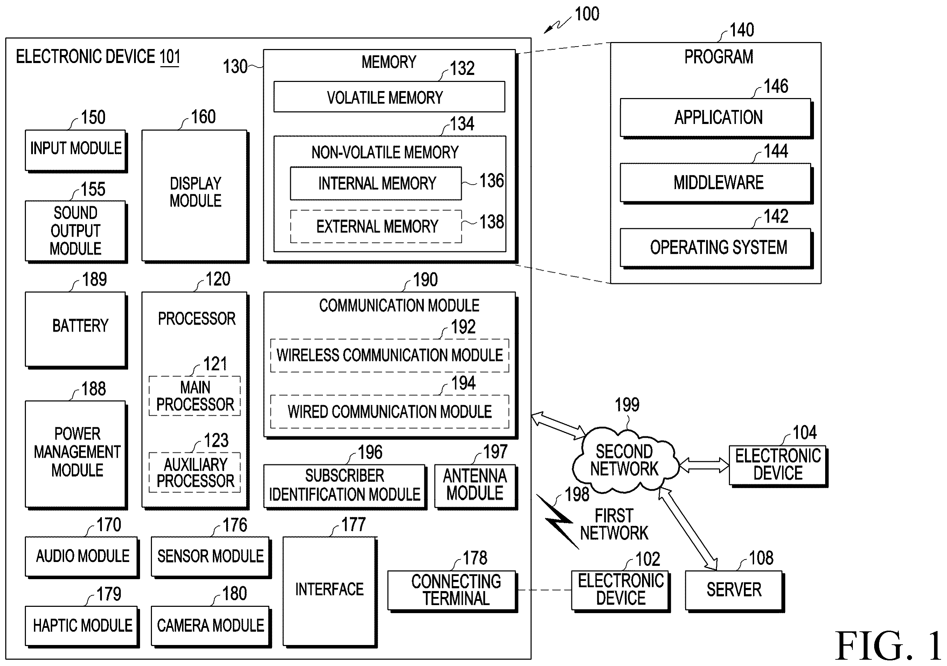

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas.

The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In the following detailed description, the length direction, the width direction, and/or the thickness direction of an electronic device may be referred to, wherein the length direction may be defined as the "Y-axis direction," the width direction may be defined as the "X-axis direction," and/or the thickness direction may be defined as the "Z-axis direction." In an embodiment, the direction in which a component is oriented may be mentioned along with the orthogonal coordinate system illustrated in the drawings, as well as the "negative/positive symbol (-/+)." For example, the front side of an electronic device and/or a housing may be defined as a "side oriented in the +Z direction," and the rear side may be defined as a "side oriented in the -Z direction." In an embodiment, a lateral side of an electronic device and/or a housing may include an area oriented in the +X direction, an area oriented in the +Y direction, an area oriented in the -X direction, and/or an area oriented in the -Y direction. In an embodiment, the "X-axis direction" may include both the "-X direction" and the "+X direction." It is noted that these are based on the Cartesian coordinate system illustrated in the drawings for the sake of brevity of description, and the descriptions of these directions or components do not limit an embodiment or embodiments of the disclosure. For example, the orthogonal coordinate system may be defined differently from one or more disclosed embodiments, depending on the design specifications of the electronic device or the user's usage habits.

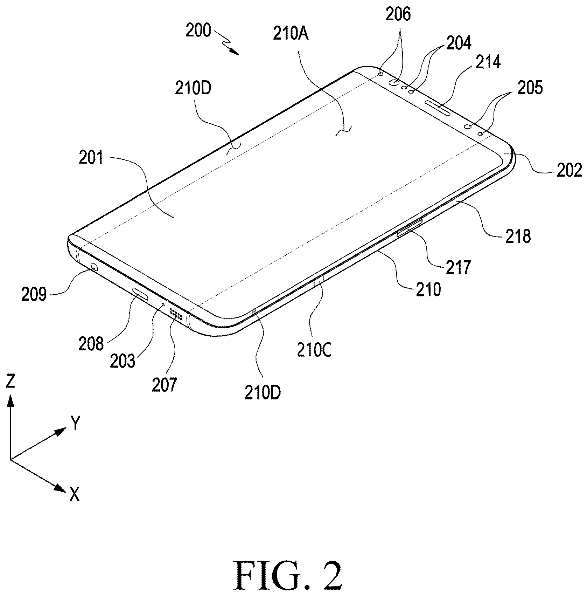

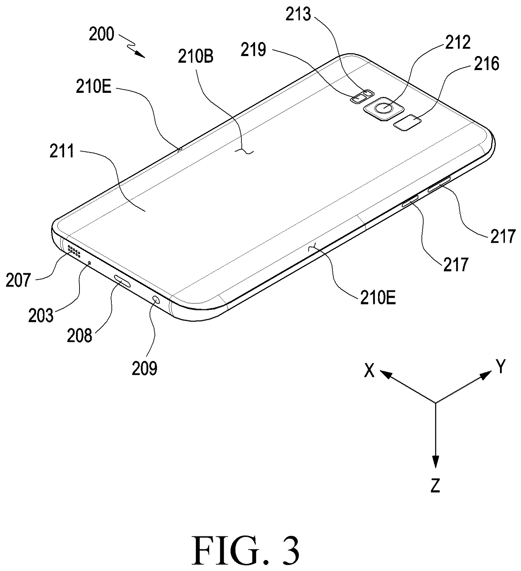

FIG. 2 is a front perspective view of an electronic device 200 according to an embodiment of the disclosure. FIG. 3 is a rear perspective view of the electronic device 200 of FIG. 2 according to an embodiment of the disclosure.

Referring to FIGS. 2 and 3, the electronic device 200 according to an embodiment may include a housing 210 including a first surface (or a front surface) 210A, a second surface (or a rear surface) 210B, and a side surface 210C surrounding the space between the first surface 210A and the second surface 210B. In an embodiment (not illustrated), the term "housing" may refer to a structure defining some of the first surface 210A, the second surface 210B, and the side surface 210C in FIG. 2. According to an embodiment, at least a portion of the first surface 210A may be defined by a substantially transparent front surface plate 202 (e.g., a glass plate including various coating layers and/or a polymer plate). The second surface 210B may be made of a substantially opaque rear surface plate 211. The rear surface plate 211 may be made of, for example, coated and/or colored glass, ceramic, polymer, metal (e.g., aluminum, stainless steel (STS), and/or magnesium), or a combination of two or more of these materials. The side surface 210C may be configured with a side surface structure (or a "side surface bezel structure") 218 coupled to the front surface plate 202 and the rear surface plate 211 and including metal and/or polymer. In an embodiment, the rear surface plate 211 and the side surface structure 218 may be integrated with each other and may include the same material (e.g., a metal material such as aluminum).

In the illustrated embodiment, the front surface plate 202 may include, at the long opposite side edges thereof, two first areas 210D, which are bent from the first surface 210A toward the rear surface plate 211 and extend seamlessly. In the illustrated embodiment (see FIG. 3), the rear surface plate 211 may include, at the long opposite side edges thereof, two second areas 210E, which are bent from the second surface 210B toward the front surface plate 202 and extend seamlessly. In an embodiment, the front surface plate 202 (or the rear surface plate 211) may include only one of the first areas 210D (or the second areas 210E). In an embodiment, some of the first areas 210D and/or the second areas 210E may not be included. In the above-described embodiments, when viewed from a side of the electronic device 200, the side surface structure 218 may have a first thickness (or width) on the side where the first areas 210D and/or the second areas 210E are not included, and may have a second thickness, which is smaller than the first thickness, on the side where the first areas 210D and/or the second areas 210E are included.

According to an embodiment, the electronic device 200 may include at least one of a display 201, audio modules 203, 207, and 214, sensor modules 204, 216, and 219, camera modules 205, 212, and 213, key input devices 217, light-emitting elements 206, and connector holes 208 and 209. In an embodiment, at least one of the components (e.g., the key input devices 217 or the light-emitting element 206) may be omitted from the electronic device 200 or other components may be additionally included.

The display 201 may be visually exposed through a substantial portion of, for example, the front surface plate 202. In an embodiment, the display 201 may be at least partially visually exposed through the front surface plate 202, which defines the first surface 210A and the first areas 210D of the side surface 210C. In an embodiment, the edge of the display 201 may be formed to be substantially the same as the shape of the periphery of the front surface plate 202 adjacent thereto. In an embodiment (not illustrated), the distance between the periphery of the display 201 and the periphery of the front surface plate 202 may be substantially constant in order to enlarge the visually exposed area of the display 201.

In an embodiment (not illustrated), recesses and/or openings may be provided in a portion of the screen display area of the display 201, and one or more of the audio module 214, the sensor modules 204, the camera modules 205, and the light-emitting elements 206, which are aligned with the recesses and/or the openings, may be included. In an embodiment (not illustrated), the rear surface of the screen display area of the display 201 may include at least one of the audio module 214, the sensor modules 204, the camera modules 205, a fingerprint sensor 216, and the light-emitting elements 206. In an embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 204 and 219 and/or at least some of the key input devices 217 may be disposed in the first areas 210D and/or the second areas 210E.

The audio modules 203, 207, and 214 may include a microphone hole 203 and speaker holes 207 and 214. A microphone configured to acquire external sound may be placed inside the microphone hole 203, and in an embodiment, multiple microphones may be placed to detect the direction of sound. The speaker holes 207 and 214 may include an external speaker hole 207 and a communication receiver hole 214. In an embodiment, the speaker holes 207 and 214 and the microphone hole 203 may be implemented as a single hole, or a speaker (e.g., a piezo speaker) may be included without the speaker holes 207 and 214.

The sensor modules 204, 216, and 219 may generate electrical signals or data values corresponding to an internal operating state and/or an external environmental state of the electronic device 200. The sensor modules 204, 216, and 219 may include, for example, a first sensor module 204 (e.g., a proximity sensor) and/or a second sensor module (not illustrated) (e.g., a fingerprint sensor) disposed on the first surface 210A of the housing 210, and/or a third sensor module 219 (e.g., an HRM sensor), and/or a fourth sensor module 216 (e.g., a fingerprint sensor) disposed on the second surface 210B of the housing 210. The fingerprint sensor may be disposed not only on the first surface 210A (e.g., the display 201) of the housing 210, but also on the second surface 210B. The electronic device 200 may further include the sensor module 176 of FIG. 1, for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, and/or an illuminance sensor.

The camera modules 205, 212, and 213 may include a first camera device 205 disposed on the first surface 210A of the electronic device 200, and a second camera device 212 and/or a flash 213 disposed on the second surface 210B. The camera devices 205 and 212 may include one or more lenses, an image sensor, and/or an image signal processor. The flash 213 may include, for example, a light-emitting diode and/or a xenon lamp. In an embodiment, two or more lenses (e.g., an infrared camera lens, a wide-angle lens, and a telephoto lens) and image sensors may be disposed on one surface of the electronic device 200.

The key input devices 217 may be disposed on the side surface 210C of the housing 210. In an embodiment, the electronic device 200 may not include some or all of the above-described key input devices 217, and the key input devices 217 not included may be implemented in another form, such as soft keys, on the display 201. In an embodiment, the key input devices may include a sensor module 216 disposed on the second surface 210B of the housing 210.

The light-emitting elements 206 may be disposed, for example, on the first surface 210A of the housing 210. The light-emitting elements 206 may provide, for example, the state information of the electronic device 200 in an optical form. In an embodiment, the light-emitting elements 206 may provide, for example, a light source that operates in conjunction with the camera module 205. The light-emitting elements 206 may include, for example, an LED, an IR LED, and a xenon lamp.

The connector holes 208 and 209 may include a first connector hole 208 capable of accommodating a connector (e.g., a USB connector) configured to transmit/receive power and/or data to/from an external electronic device, and/or a second connector hole (e.g., an earphone jack) 209 capable of accommodating a connector configured to transmit/receive an audio signal to/from an external electronic device.

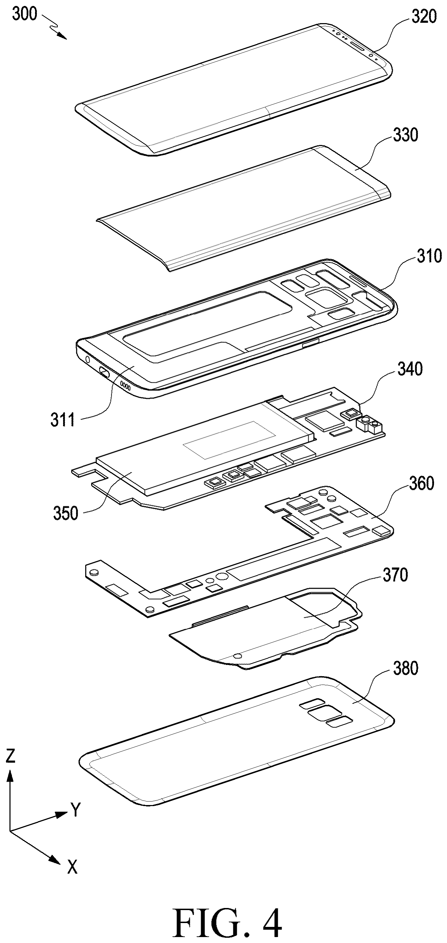

FIG. 4 is an exploded perspective view illustrating the electronic device 200 illustrated in FIG. 2 according to an embodiment of the disclosure.

Referring to FIG. 4, the electronic device 300 (e.g., the electronic device 200 in FIG. 2 or FIG. 3) may include a side surface structure 310 (e.g., the side surface structure 218 in FIG. 2), a first support member 311 (e.g., the bracket), a front surface plate 320 (e.g., the front surface plate 202 in FIG. 2), a display 330 (e.g., the display 201 in FIG. 2), a printed circuit board 340 (e.g., a printed circuit board (PCB), a printed board assembly (PBA), a flexible PCB (FPCB), and/or a rigid-flexible PCB (RFPCB)), a battery 350, a second support member 360 (e.g., a rear case), an antenna 370, and a rear surface plate 380 (e.g., the rear surface plate 211 in FIG. 3). In an embodiment, at least one of the components (e.g., the first support member 311 or the second support member 360) may be omitted from the electronic device 300, or other components may be additionally included. At least one of the components of the electronic device 300 may be the same as or similar to at least one of the components of the electronic device 200 of FIG. 2 or FIG. 3, and a redundant description thereof will be omitted below.

The first support member 311 may be arranged inside the electronic device 300 to be connected to the side surface structure 310 or may be integrated with the side surface structure 310. The first support member 311 may be made of, for example, a metal material and/or a non-metal (e.g., polymer) material. The first support member 311 may include one surface to which the display 330 is coupled and the other surface to which the printed circuit board 340 is coupled. The printed circuit board 340 may have a processor, memory, and/or an interface mounted thereon. The processor may include at least one of, for example, a central processing unit, an application processor, a graphics processor, an image signal processor, a sensor hub processor, and/or a communication processor.

The memory may include, for example, volatile memory and/or non-volatile memory.

The interface may include, for example, a high-definition multimedia interface (HDMI), a universal serial bus (USB) interface, an SD card interface, and/or an audio interface. The interface may electrically and/or physically connect, for example, the electronic device 300 to an external electronic device, and may include a USB connector, an SD card/an MMC connector, and/or an audio connector.

The battery 350 is a device for supplying power to at least one component of the electronic device 300, and may include, for example, a non-rechargeable primary battery, a rechargeable secondary battery, and/or a fuel cell. At least a portion of the battery 350 may be disposed on substantially the same plane as, for example, the printed circuit board 340. The battery 350 may be integrally disposed inside the electronic device 300, or may be detachably disposed on the electronic device 300.

The antenna 370 may be disposed between the rear surface plate 380 and the battery 350. The antenna 370 may include, for example, a near-field communication (NFC) antenna, a wireless charging antenna, and/or a magnetic secure transmission (MST) antenna. For example, the antenna 370 may execute short-range communication with an external device or may transmit/receive power required for charging to/from an external device in a wireless manner. In an embodiment, an antenna structure may be configured with a portion or a combination of the side surface structure 310 and/or the first support member 311.

It is noted that, in the following detailed description, the electronic devices 101, 102, 104, 200, and 300 of the preceding embodiments may be referred to, and, for the components that may be easily understood through the preceding embodiments, the same reference numerals may be assigned or omitted, or a detailed description thereof may also be omitted.

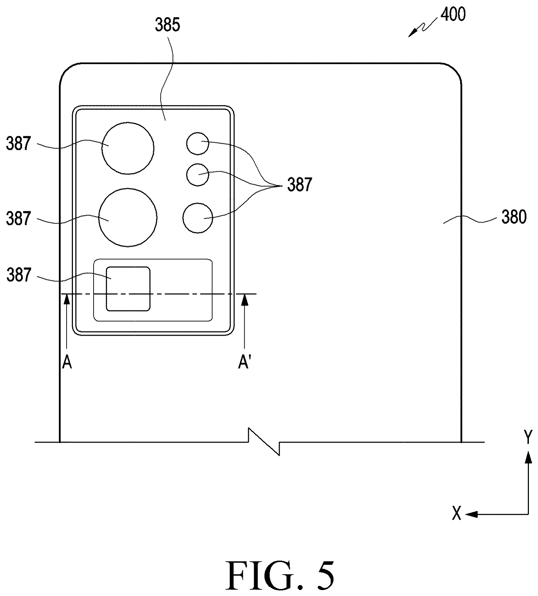

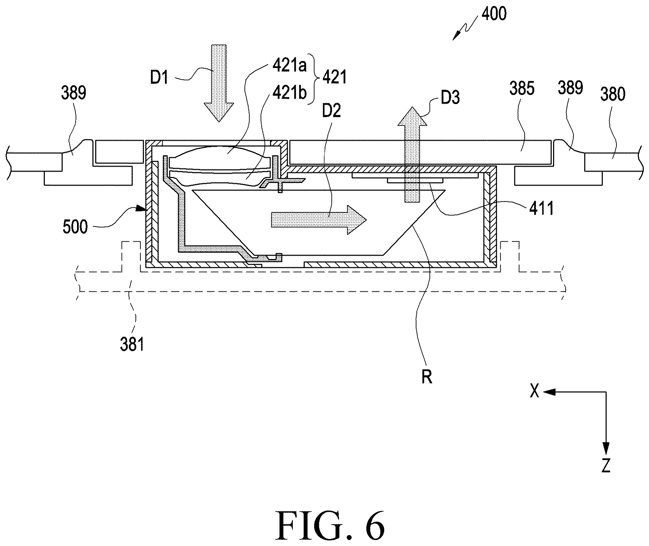

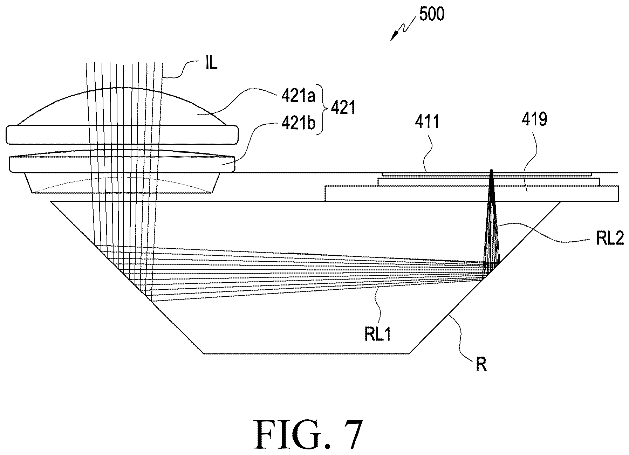

FIG. 5 is a plan view exemplifying the rear surface of an electronic device 400 (e.g., the electronic device 101, 102, 104, 200, or 300 in FIGS. 1 to 4) according to an embodiment of the disclosure. FIG. 6 is a cross-sectional view of a portion of the electronic device 400 according to an embodiment of the disclosure taken along line A-A' of FIG. 5. FIG. 7 is a configuration view illustrating an optical path of an imaging device 500 in the electronic device 400 according to an embodiment of the disclosure.

Referring to FIGS. 5 and 6, the electronic device 400 according to an embodiment of the disclosure may include a camera window 385 disposed on one surface (e.g., the second surface 210B in FIG. 3). In an embodiment, the camera window 385 may be a portion of the rear surface plate 380. In an embodiment, the camera window 385 may be coupled to the rear surface plate 380 via a decorative member 389, wherein, when viewed from the outside, the decorative member 389 may be exposed in the form of wrapping the periphery of the camera window 385. According to an embodiment, the camera window 385 may include a plurality of transparent areas 387, and the electronic device 400 may receive external light or transmit light to the outside through at least one of the transparent areas 387. For example, the electronic device 400 may include at least one imaging device 500 (e.g., the camera modules 180, 205, 212, and 213 of FIGS. 1 to 3) arranged to correspond to at least a portion of the transparent areas 387, and at least one light source (e.g., an infrared light source) arranged to correspond to another portion of the transparent areas 387. In an embodiment, the imaging device 500 and/or the light source may receive external light through one of the transparent areas 387 or emit light to the outside of the electronic device 400. In an embodiment, the electronic device 400 and/or the imaging device 500 may further include a camera support member 381. The camera support member 381 may place or fix at least one of the imaging device 500 and/or another imaging device adjacent thereto (e.g., a wide-angle camera, an ultra-wide-angle camera, and/or a macro camera) on an inner side of the rear surface plate 380 and/or the camera window 385. In an embodiment, the camera support member 381 may substantially be part of the first support member 311 and/or the second support member 360 of FIG. 4.

According to an embodiment, the electronic device 400 may include an imaging device 500 and/or at least one of a wide-angle camera, an ultra-wide-angle camera, a macro camera, a telephoto camera, or an infrared photodiode as a light-receiving element, and may include a flash (e.g., the flash 213 in FIG. 3) or an infrared laser diode as a light source and/or a light-emitting element. In an embodiment, the electronic device 400 may emit an infrared laser toward a subject by using an infrared laser diode and an infrared photodiode and may receive the infrared laser reflected by the subject to detect a distance and/or depth to the subject. In an embodiment, the electronic device 400 may photograph a subject by using any one camera or two or more of the cameras in combination, and may provide illumination toward the subject by using a flash, if necessary.

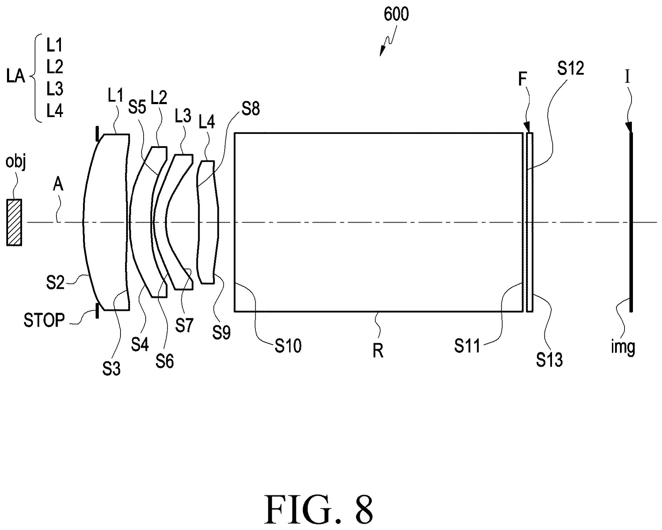

According to an embodiment, among the cameras, a wide-angle camera, an ultra-wide-angle camera, and/or a macro camera may have a shorter length in the direction of the optical axis of the one or more lenses compared to a telephoto camera (e.g., the imaging device 500). For example, a telephoto camera (e.g., the imaging device 500), which has a relatively narrow field of view and a relatively long focal length, may have a greater lens total length than other cameras (e.g., a wide-angle camera, an ultra-wide-angle camera, and/or a macro camera). The "lens total length" may refer to a distance from the object-side surface of the first lens on the object side to the imaging surface of the image sensor 411. As in an embodiment described later (e.g., the imaging device 600 of FIG. 8), when another optical member (e.g., a mirror and/or a prism) is disposed between the one or more lenses and the image sensor, the "lens total length" may refer to a distance from the object-side surface of the first lens on the object side to the sensor-side surface of the first lens on the image sensor side. In an embodiment, the wide-angle camera, the ultra-wide-angle camera, and/or the close-up camera may have substantially little effect on the thickness of the electronic device 400 even if the one or more lenses are arranged along the thickness (e.g., the thickness measured in the Z-axis direction of FIG. 4 or FIG. 6) direction of the electronic device 400. For example, a wide-angle camera, an ultra-wide-angle camera, and/or a close-up camera may be disposed in the electronic device 400 in the state in which a direction in which light is incident from the outside into the electronic device 400 is substantially the same as the optical axis direction of the one or more lenses. In an embodiment, compared to a wide-angle camera, an ultra-wide-angle camera, and/or a macro camera, the imaging device 500 (e.g., a telephoto camera) may have a narrow field of view but may be useful for photographing subjects at longer distances. In an embodiment of the disclosure, the imaging device 500 may include at least one optical member R configured to reflect and/or refract incident light (IL) in a different direction. By including the at least one optical member R, the imaging device 500 may easily implement a telephoto function while suppressing an increase in the thickness of the electronic device 400.

Referring to FIGS. 6 and 7, a folded camera (e.g., the imaging device 500) may include a lens assembly 421 (e.g., lenses 421a and 421b), at least one optical member R (e.g., a refractive member or a reflective member), and/or an image sensor 411. In an embodiment, the at least one optical member R may guide light (e.g., incident light IL), which is focused or guided by the lens assembly 421, to the image sensor 411 by reflecting or refracting the light at least once. In an embodiment, the optical member R may include, for example, a prism and/or a mirror. For example, the optical member R may be formed as a prism including at least one mirror. In an embodiment, the optical member R may reflect and/or refract light IL, which is incident in a first direction D1, in a second direction D2 crossing the first direction D1. The first direction D1 may mean, for example, the direction in which light IL is incident on the electronic device 400 and/or the imaging device 500 from the outside through any one of the transparent areas 387 of FIG. 5 when photographing a subject. In an embodiment, the first direction D1 may refer to a photographing direction, a direction toward a subject, a direction toward which the imaging device 500 is directed, and/or a direction parallel thereto. In an embodiment, the first direction D1 may be parallel to the thickness direction of the electronic device 400 and/or the Z-axis direction.

According to an embodiment, light RL1 that is reflected or refracted inside the optical member R and travels in the second direction D2 may be further reflected and/or refracted by another area inside the optical member R and travel in a third direction D3 that intersects the second direction D2. In an embodiment, the third direction D3 may be substantially perpendicular to the second direction D2. For example, the third direction D3 may refer to a direction parallel to the Z-axis direction. However, an embodiment of the disclosure is not limited thereto, and the third direction D3 may be a direction inclined with respect to the second direction D2 and/or the X-Y plane, depending on the arrangement and specifications of the imaging device 500 and/or the optical member R in the electronic device 400. In an embodiment, the third direction D3 may be substantially parallel to the first direction D1.

According to an embodiment, the image sensor 411 may be configured to detect light RL2 that travels in the third direction D3 after being reflected and/or refracted at least once inside the optical member R. For example, incident light IL from outside may be reflected and/or refracted at least once (e.g., twice in the illustrated embodiment) inside the optical member R and then detected by the image sensor 411, and the electronic device 400 and/or the imaging device 500 may acquire a subject image based on a signal and/or information detected through the image sensor 411. According to an embodiment, the image sensor 411 may be disposed in a state substantially parallel to the X-Y plane. For example, when the imaging device 500 has an optical image stabilization function with a structure that shifts the image sensor 411, the image sensor 411 may move horizontally in a plane substantially perpendicular to the first direction D1 and/or the third direction D3.

According to an embodiment, during the optical image stabilization function, the image sensor 411 may be shifted in the length direction of the electronic device 400 (e.g., the Y-axis direction) and/or the width direction of the electronic device 400 (e.g., the X-axis direction). For example, by being disposed on a plane substantially perpendicular to the first direction D1 and/or the third direction D3, the image sensor 411 may be easily enlarged and/or a space for the optical image stabilization operation may be easily secured in an electronic device having a small thickness (e.g., a thickness within about 10 mm). In an embodiment, when the imaging device 500 is used as a telephoto camera, the quality of a captured image may be further enhanced by incorporating the optical image stabilization function. In an embodiment, when the image sensor 411 is enlarged, the performance of the imaging device 500 may be further enhanced.

According to an embodiment, the lens assembly 421 may guide and/or focus light IL, which is incident from the first direction D1, into the optical member R. In an embodiment, the lens assembly 421 and/or a first lens (e.g., the first lens 421a) disposed on the object side in the imaging device 500 may have a positive refractive power. For example, by configuring the first lens 421a to focus and/or align the light IL incident from outside into the optical member R, the optical system from the first lens 421a to the image sensor 411 may be miniaturized. In an embodiment, the lens assembly 421 may further include an additional lens (e.g., one or more second lenses 421b) for focusing and/or aligning the light incident from outside.

According to an embodiment, at least one of the first lens 421a and/or the one or more second lenses 421b may be configured to move forward and backward in a direction in which the light is incident (e.g., the first direction D1 in FIG. 6). For example, the electronic device 400 and/or the imaging device 500 may perform focal length adjustment and/or focus adjustment by moving at least one of the first lens 421a and/or the one or more second lenses 421b forward and backward. In an embodiment, the image sensor 411 may perform focal length adjustment and/or focus adjustment by moving forward and backward along the third direction D3 of FIG. 6.

According to an embodiment, the electronic device 400 and/or the imaging device 500 may further include an infrared cut filter 419. In an embodiment, the infrared cut filter 419 may suppress or substantially block light in the infrared and/or near-infrared wavelength band from being incident into the image sensor 411, and may be disposed at any position in the optical path between the first lens 421a and the image sensor 411. In an embodiment, by disposing the infrared cut filter 419 at a position close to the image sensor 411 (e.g., between the image sensor 411 and the optical member R), it is possible to suppress and/or prevent the infrared cut filter 419 from being visually exposed to the outside. In an embodiment, the optical member R may include an infrared cut coating layer, in which case the infrared cut filter 419 may be omitted. Accordingly, the image sensor 411 may detect light that has substantially passed through the infrared cut filter 419 (or the infrared cut coating layer). According to an embodiment or embodiments of the disclosure, the optical member R may be selectively designed according to the structure of the imaging device 500. For example, in an embodiment, the optical member R may have a triangular prism shape. In an embodiment, the optical member R may have a trapezoidal prism shape. The shape of the optical member R is not limited to the structure illustrated in the disclosure. For example, if the optical member R reflects, refracts, or transmits light, the optical member R may have a structure other than a triangular prism or a trapezoidal prism. In an embodiment, various types of optical members R may be disposed. For example, the optical member R may be disposed as a prism. For example, the optical member R may be disposed as at least one mirror. For example, the optical member R may include a substantially transparent material. For example, the optical member R may be manufactured using glass.

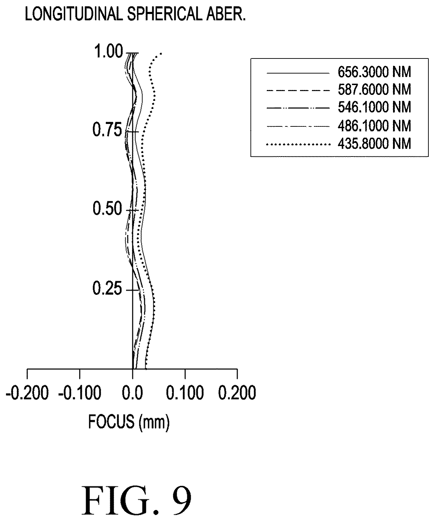

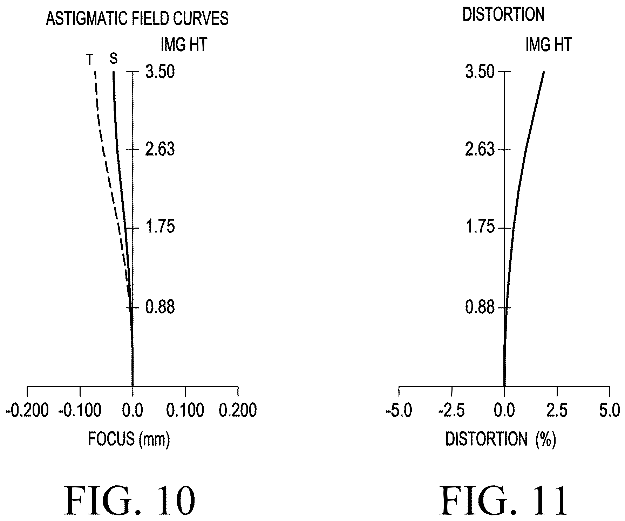

FIG. 8 is a view illustrating an imaging device 600 (e.g., the camera module 180, 205, 212, or 213 in FIGS. 1 to 3 or the imaging device 500 in FIG. 6) according to an embodiment of the disclosure. FIG. 9 is a graph illustrating the spherical aberration of the imaging device 600 of FIG. 8 according to an embodiment of the disclosure. FIG. 10 is a graph illustrating the astigmatism of the imaging device 600 of FIG. 8 according to an embodiment of the disclosure. FIG. 11 is a graph illustrating the distortion of the imaging device 600 of FIG. 8 according to an embodiment of the disclosure.

FIG. 9 is a graph illustrating the spherical aberration of the imaging device 600 according to an embodiment of the disclosure. The horizontal axis represents the coefficient of longitudinal spherical aberration, and the vertical axis represents the normalized distance from the optical axis, illustrating the change in longitudinal spherical aberration depending on the wavelength of light. The longitudinal spherical aberrations are represented for light beams with wavelengths of, for example, 656.3000 nm, 587.6000 nm, 546.1000 nm, 486.1000 nm, and 435.8000 nm, respectively. FIG. 10 is a graph illustrating the astigmatism (astigmatic field curves) of the imaging device 600 according to an embodiment of the disclosure, represented for light with a wavelength of 546.1000 nm, where "s" indicates a sagittal plane and "t" indicates a tangential (meridional) plane. FIG. 11 is a graph illustrating the distortion of the imaging device 600 according to an embodiment of the disclosure, represented for light with a wavelength of 546.1000 nm. In the following description, it should be noted that the imaging device 600, which has a structure including one or more optical members R disposed between one or more lenses L1, L2, L3, and L4 and an image sensor I, may show inversion between negative and positive values in the graphs for spherical aberration, astigmatism, and/or distortion, depending on the number of times the light is reflected and/or refracted by the one or more optical members R. In describing an embodiment or embodiments of the disclosure, optical data such as "lens total length" and "focal length" may refer to values that do not include the one or more optical members R. For example, the one or more optical members R may change the light path by performing reflection and/or refraction, but may not substantially affect the optical performance (e.g., focal length, F-number, and/or angle of view) of the imaging device 600.

According to an embodiment, the imaging device 600 may further include an additional optical member (not illustrated) disposed in front of the lens assembly LA. In an embodiment, the imaging device 600 may further include an additional optical member (not illustrated) disposed between two adjacent lenses among the lenses L1, L2, L3, and L4. For example, depending on the specifications of the imaging device 600 or the electronic device 400 to be manufactured, the illustrated optical member R may be omitted, or an additional unillustrated optical member may be further disposed. In the above-described embodiment, the optical member R is exemplified as a prism having a generally triangular shape, but it should be noted that an embodiment or embodiments of the disclosure are not limited thereto. For example, the optical member R may be implemented in the form of a polygonal prism, such as a rectangular (e.g., parallelogram or trapezoidal) shape or a pentagonal shape.

Referring to FIG. 8, the imaging device 600 (e.g., the camera module 180, 205, 212, or 213 of FIGS. 1 to 3 and/or the imaging device 500 of FIG. 6) may include a lens assembly LA including at least four lenses L1, L2, L3, and L4, an image sensor I, and an optical member R disposed between the image sensor I and the at least four lenses (hereinafter referred to as "the lenses L1, L2, L3, and L4"). In an embodiment, the lens assembly LA may be understood to include the optical member R. In an embodiment, the imaging device 600 may include a photosensitive member that serves as a substitutes for the image sensor I. In an embodiment, when the imaging device 600 includes the image sensor I, replication, transfer, and/or post-processing of the acquired image may be facilitated.

As mentioned above, the imaging device 600 may include an additional optical member disposed in front of the first lens L1, which is first arranged among the lenses L1, L2, L3, and L4, or an additional optical member disposed between two adjacent lenses among the lenses L1, L2, L3, and L4. For example, in an embodiment, one or more additional optical members (not illustrated) may be disposed, and this may vary depending on the specifications of the imaging device 600 and the space secured inside the electronic device 400. The lenses L1, L2, L3, and L4 are sequentially arranged along the optical axis A or in the direction in which light is incident, and may be distinguished by attaching ordinal numbers such as "first," "second," "third," and/or "fourth," corresponding to the order of arrangement in the direction in which light is incident. For example, the lens that is first arranged in the direction in which light is incident may be referred to as the "first lens L1."

In FIG. 8, "S2" may denote the object-side surface of the first lens L1 among the lenses L1, L2, L3, and L4, and "S3" may denote the sensor-side surface of the first lens L1. The imaging device 600 and/or the lens assembly LA may include an aperture stop (hereinafter, referred to as "STOP") disposed in front of the first lens L1. In an embodiment, the STOP may be understood to be disposed behind the apex (e.g., a point intersecting the optical axis A) of the object-side surface S2 of the first lens L1. In an embodiment, "S4" may denote the object-side surface of the second lens L2, which is the second lens arranged in the direction in which light is incident among the lenses L1, L2, L3, and L4, and "S5" may denote the sensor-side surface of the second lens L2. In an embodiment, "S6" may denote the object-side surface of the third lens L3 among the lenses L1, L2, L3, and L4, and "S7" may denote the sensor-side surface of the third lens L3. In an embodiment, "S8" may denote the object-side surface of the fourth lens L4 among the lenses L1, L2, L3, and L4, and "S9" may denote the sensor-side surface of the fourth lens L4. In an embodiment, "S10" may denote the object-side surface of the optical member R, which is a surface on which light focused or guided by the lenses L1, L2, L3, and L4 is incident, and "S11" may denote the sensor-side surface of the optical member R, which may be a surface facing the image sensor I or aligned with the image sensor I on the optical axis. In an embodiment, a filter member (e.g., an infrared cut filter F) may be disposed between the optical member R and the image sensor I, "S13" may denote the sensor-side surface of the infrared cut filter F, and the object-side surface of the infrared cut filter F may be denoted by "S12." In embodiments described below, reference numerals assigned to respective lens surfaces may differ from those in the embodiment of FIG. 8.

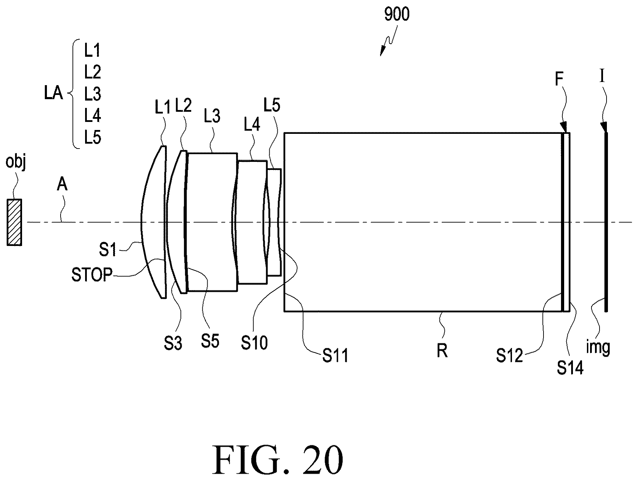

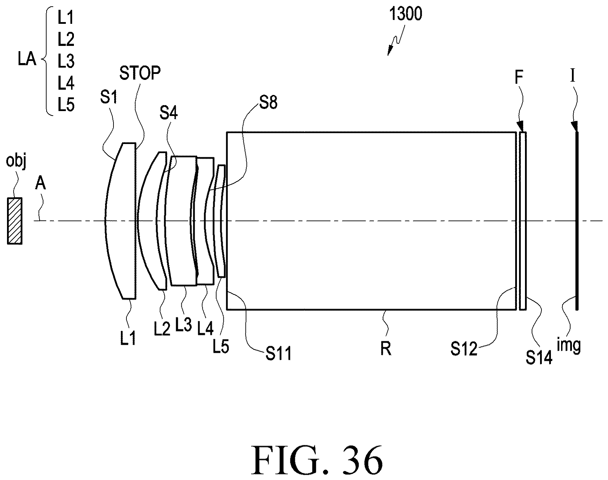

According to an embodiment, the first lens L1 may have a positive refractive power, the second lens L2 may have a positive refractive power, and/or the third lens L3 may have a negative refractive power. In an embodiment, the fourth lens L4 may have either a positive refractive power or a negative refractive power. As will be described with reference to the embodiments of FIG. 20 and/or FIG. 36, the lens assembly LA and/or the imaging device 600 may further include a fifth lens L5, which may have either a positive refractive power or a negative refractive power.

In the illustrated embodiment, the lenses L1, L2, L3, and L4, the optical member R, and/or the image sensor I are illustrated as being aligned on a single optical axis A, but it is noted that an embodiment or embodiments of the disclosure are not limited thereto. For example, the optical member R may receive light focused or guided by the lenses L1, L2, L3, and L4 and may internally reflect the light at least once. For example, the object-side surface S10 of the optical member R may be aligned with the lenses L1, L2, L3, and L4 on the optical axis A, and the image sensor I may be aligned with the sensor-side surface S11 of the optical member in a direction intersecting the optical axis A. For example, FIG. 8 illustrates a simplified optical axis A, and light focused or guided by the lenses L1, L2, L3, and L4 may be incident on the image sensor I (e.g., imaging surface img) by traveling along a path in which the light is reflected at least once inside the optical member R, as in the embodiments of FIG. 6 or FIG. 7. As will be described below with reference to the lens data tables, it is noted that reference numerals for lens surfaces not illustrated in the drawings may be presented.

According to an embodiment, the optical member R may reflect, refract, and/or guide light incident in the direction of the optical axis A at least once in a different direction (e.g., a direction that intersects the optical axis A). For example, light that has passed through the optical member R may be incident on the image sensor I substantially along a direction that intersects the optical axis A. According to an embodiment, the imaging device 600 may further include an infrared cut filter F. For example, the infrared cut filter F may be disposed between the sensor-side surface S11 of the optical member R and the image sensor I. The infrared cut filter F may block, for example, light (e.g., infrared light) that is not visible to the human eye but may be detected by a photosensitive material or the image sensor I. In an embodiment, depending on the purpose or function of the imaging device 600, the infrared cut filter F may be replaced with a band-pass filter that transmits light of a predetermined wavelength band.

According to an embodiment, at least four lenses L1, L2, L3, and L4 may be sequentially arranged along the optical axis A from the object obj side toward the optical member R or the image sensor I. In an embodiment, the optical axis A may be disposed to be substantially parallel to the front surface (e.g., the first surface 210A of FIG. 2) and/or the rear surface (e.g., the second surface 210B of FIG. 3) of the electronic device (e.g., the electronic device 101, 200, 300, or 400 in FIGS. 1 to 6). According to an embodiment, the electronic device 400 (e.g., the processor 120 of FIG. 1) and/or the imaging device 600 may be configured to move at least one of the lenses L1, L2, L3, and L4 forward and backward along the direction of the optical axis A. For example, by moving at least one of the lenses L1, L2, L3, and L4 along the optical axis A, a focal length adjustment operation and/or a focus adjustment operation may be performed. In an embodiment, the electronic device 400 (e.g., the processor 120 of FIG. 1) and/or the imaging device 600 may perform an optical image stabilization operation by moving at least one of the lenses L1, L2, L3, and L4 in a plane substantially perpendicular to the optical axis A. The phrase "moving in a plane substantially perpendicular to the optical axis A" may be understood, for example, as movement of one or more of the lenses L1, L2, L3, and L4 along at least two directions substantially perpendicular to the optical axis A. The "at least two directions" may be, for example, directions that are substantially perpendicular to each other.

According to an embodiment, the image sensor I may be configured to receive light that has been guided and/or focused through the lenses L1, L2, L3, and L4 and/or the optical member R, so as to enable the imaging device 600 and/or the electronic device 400 including the same to acquire an image of a subject. In an embodiment, the image sensor I may be disposed obliquely to or so as to intersect with the front surface (e.g., the first surface 210A of FIG. 2) and/or the rear surface (e.g., the second surface 210B of FIG. 3) of the electronic device (e.g., the electronic device 101, 200, 300, or 400 in FIGS. 1 to 6). For example, the imaging surface img of the image sensor I may form an acute angle and/or an obtuse angle with the optical axis A. In an embodiment, in a structure in which the optical axis A (e.g., the arrangement of the lenses L1, L2, L3, and L4) is disposed perpendicular to the front or rear surface of the electronic device 400 and light incident on the optical member R is reflected by about 90 degrees inside the optical member R, the imaging surface img of the image sensor I may be disposed perpendicular to the front or rear surface of the electronic device 400. Depending on the direction or angle in which the optical member R reflects light, the imaging surface img may be disposed obliquely with respect to the optical axis A, the X-axis, the Y-axis, and/or the Z-axis of FIGS. 2 to 6. In an embodiment, since the image sensor I may be disposed in various directions with respect to the alignment direction of the lenses L1, L2, L3, and L4, the degree of design freedom in manufacturing the imaging device 600 and/or the electronic device 400 including the same may be increased.

According to an embodiment, the optical member R may change the traveling direction of light by reflecting and/or refracting the incident light at least once. For example, by disposing the optical member R between the lenses L1, L2, L3, and L4 and the image sensor I, the degree of design freedom in arranging (or orienting) the image sensor I with respect to the lenses L1, L2, L3, and L4 may be increased. The optical member R is disposed between the lenses L1, L2, L3, and L4 and the image sensor I and may receive light incident through the lenses L1, L2, L3, and L4 in the direction of the optical axis A. In an embodiment, the optical member R may emit the light, which is incident through the lenses L1, L2, L3, and L4 in the direction of the optical axis A, in a direction intersecting the optical axis A by reflecting and/or refracting the light at least once. The optical member R may include, for example, a mirror and/or a prism.

According to an embodiment, the electronic device 400 (e.g., the processor 120 of FIG. 1) and/or the imaging device 600 may perform optical image stabilization by rotating or tilting the optical member R with respect to the optical axis A. The "tilt operation" may include, for example, an operation in which the optical member R rotates about an arbitrary axis intersecting the optical axis A. The central axis of the tilt operation may be variously configured depending on the structure of the imaging device 600 and/or the electronic device 400 to be actually manufactured. In an embodiment, a subject tracking function may be performed through a rotation operation or a tilt operation of the optical member R. For example, the processor 120 may perform an optical image stabilization operation or a subject tracking function by rotating or tilting the optical member R. In an embodiment, the processor 120 may perform a focus adjustment operation by moving the image sensor I forward and backward along a direction in which light is incident onto the imaging surface img, and/or may perform an optical image stabilization operation by moving the image sensor I in a plane substantially perpendicular to the direction in which light is incident. When an additional optical member (not illustrated) is included, the imaging device 600 or the electronic device 400 may perform an optical image stabilization operation or a subject tracking function using the additional optical member.

According to an embodiment, the above-described and/or later-described imaging device (e.g., the imaging device 600, 700, 800, 900, 1000, 1100, 1200, 1300, 1400, or 1500 of FIGS. 8, 12, 16, 20, 24, 28, 32, 36, 40, and/or 41) or a lens assembly LA of the imaging device may satisfy the conditions of Equation 1 below.

[Equation 1]

$$-0.9 < \frac{\dfrac{f12}{V1+V2} + \dfrac{f34}{V3+V4}}{Vp} \times 100 < -0.5$$

Here, "f12" may denote a combined focal length of the first lens L1 and the second lens L2, "f34" may denote a combined focal length of the third lens L3 and the fourth lens L4, "V1" may denote an Abbe number of the first lens L1, "V2" may denote an Abbe number of the second lens L2, V3 may denote an Abbe number of the third lens L3, V4 may denote an Abbe number of the fourth lens L4, and Vp may denote an Abbe number of the optical member R. The value calculated by Equation 1 may be in units of mm. Equation 1 presents, for example, conditions related to the refractive powers and materials (e.g., Abbe numbers) of the lenses L1, L2, L3, and L4 in the imaging device 600, 700, 800, 900, 1000, 1100, 1200, 1300, 1400, or 1500. When the calculated value of Equation 1 becomes less than -0.9 or greater than -0.5, chromatic aberration caused by the optical member R may increase, or spherical aberration or field curvature may increase. For example, when the conditions of Equation 1 are satisfied, the lens assembly LA and/or the imaging device 600 may include an optical member R such as a prism, which may allow for easy correction of chromatic aberration. When the conditions of Equation 1 are satisfied, the refractive powers and materials (e.g., Abbe numbers) of the lenses L1, L2, L3, and L4 in the lens assembly LA and/or the imaging device 600 may be easily combined, so as to suppress spherical aberration or field curvature. For example, the sensitivity in the manufacturing or assembling of the lenses L1, L2, L3, and L4 may be reduced, and thus favorable optical performance may be achieved. In an embodiment, the lens assembly LA and/or the imaging device 600 that satisfies the conditions of Equation 1 may provide a field of view (FOV) of about 15 degrees to about 35 degrees. For example, the lens assembly LA and/or the imaging device 600 that satisfies the conditions of Equation 1 may include an optical member R such as a mirror or a prism, allowing for easy correction of chromatic aberration and manufacturability, and may provide favorable telephoto performance.

According to an embodiment, at least one of the first lens L1 and the second lens L2 may have an Abbe number of about 50 or more. In an embodiment, both the first lens L1 and the second lens L2 may have Abbe numbers of about 50 or more. When the conditions of the first lens L1 and the second lens L2 regarding the Abbe numbers are satisfied, the lens assembly LA and/or the imaging device 600 may allow for easy correction of chromatic aberration and may have reduced sensitivity in the manufacturing or assembling of the lenses L1, L2, L3, and L4. In an embodiment, when the conditions of the first lens L1 and the second lens L2 regarding the Abbe numbers are satisfied, field curvature in the lens assembly LA and/or the imaging device 600 may be suppressed, so that an image of a subject with improved quality may be provided.

According to an embodiment, at least one of the third lens L3 and the fourth lens L4 may have an Abbe number of about 40 or less. In an embodiment, both the third lens L3 and the fourth lens L4 may have Abbe numbers of about 40 or less. When the conditions of the third lens L3 and the fourth lens L4 regarding the Abbe numbers are satisfied, the lens assembly LA and/or the imaging device 600 may allow for easy correction of chromatic aberration and may have reduced sensitivity in the manufacturing or assembling of the lenses L1, L2, L3, and L4. In an embodiment, when the conditions of the third lens L3 and the fourth lens L4 regarding the Abbe numbers are satisfied, field curvature in the lens assembly LA and/or the imaging device 600 may be suppressed, so that an image of a subject with improved quality may be provided.

The manufacturing specifications of the imaging devices 600, 700, 800, 900, 1000, 1100, 1200, 1300, 1400, and 1500 of FIGS. 8, 12, 16, 20, 24, 28, 32, 36, 40, and/or 41, the manufacturing specifications of the lenses L1, L2, L3, L4, and L5, and/or calculated values for each embodiment based on Equation 1 are exemplified in Tables 1 and 2. In Tables 1 and 2, image height (IMG HT) refers to the maximum distance from a point on the image sensor I where the optical axis A intersects to the edge of the imaging surface img, and may be understood, for example, as half the diagonal length of the imaging surface img.

[Table 1]

| | | Imaging device 600 of FIG.8 | Imaging device 700 of FIG.12 | Imaging device 800 of FIG.16 | Imaging device 900 of FIG. 20 |
|---|---|---|---|---|---|
| Total focal length | | 16.93 | 16.92 | 16.92 | 19.55 |
| (mm) | | | | | |
| Field of view (FOV) (deg.) | | 23 | 23 | 23 | 24 |

(continued)

|  | | Imaging device 600 of FIG.8 | Imaging device 700 of FIG.12 | Imaging device 800 of FIG.16 | Imaging device 900 of FIG. 20 |
|---|---|---|---|---|---|
| Image height (IMT HT) (mm) | | 3.5 | 3.5 | 3.5 | 4.2 |
| F number (Fno) | | 2.8 | 3.0 | 2.8 | 3.0 |
| Effective focal length (mm) | f1 | 14.12 | 14.75 | 14.13 | 11.93 |
| | f2 | 26.54 | 26.54 | 26.96 | 28.42 |
| | f3 | -19.06 | -14.34 | -17.93 | -24.70 |
| | f4 | -44.49 | 134.24 | -62.08 | -71.00 |
| | f5 | N/A | N/A | N/A | -16.92 |
| | f12 | 9.23 | 9.46 | 9.35 | 8.50 |
| | f34 | -13.51 | -16.99 | -14.11 | -18.00 |
| Refractive index (nd) | L1 | 1.593 | 1.544 | 1.593 | 1.544 |
| | L2 | 1.544 | 1.544 | 1.544 | 1.544 |
| | L3 | 1.615 | 1.68 | 1.615 | 1.62 |
| | L4 | 1.680 | 1.64 | 1.680 | 1.680 |
| | L5 | N/A | N/A | N/A | 1.567 |
| | Prism | 1.550 | 1.52 | 1.590 | 1.544 |
| Abbe number (Abv) | L1 | 55.9 | 55.9 | 55.9 | 55.9 |
| | L2 | 55.9 | 55.9 | 55.9 | 55.9 |
| | L3 | 18.1 | 18.1 | 18.1 | 25.8 |
| | L4 | 19.2 | 23.51 | 19.2 | 19.0 |
| | L5 | N/A | N/A | N/A | 37.4 |
| | Prism | 40.1 | 64.1 | 35.1 | 64.0 |
| Calculated value of Equation 1 | | -0.697 | -0.505 | -0.839 | -0.509 |

[Table 2]

|  | | Imaging device 1000 of FIG. 24 | Imaging device 1100 of FIG. 28 | Imaging device 1200 of FIG. 32 | Imaging device 1300 of FIG. 36 |
|---|---|---|---|---|---|
| Total focal length (mm) | | 16.94 | 16.95 | 16.95 | 19.55 |
| Field of view (FOV) (deg.) | | 23 | 23 | 23 | 24 |
| Image height (IMT HT) (mm) | | 3.5 | 3.5 | 3.5 | 4.2 |
| F number (Fno) | | 2.8 | 3.0 | 2.8 | 3.0 |
| Effective focal length (mm) | f1 | 14.25 | 12.46 | 11.40 | 14.04 |
| | f2 | 31.60 | 50.00 | 50.00 | 30.00 |
| | f3 | -21.08 | -164.80 | -19.54 | -70.00 |
| | f4 | -57.70 | -13.20 | -14.43 | -13.99 |
| | f5 | N/A | N/A | N/A | -101.11 |
| | f12 | 9.88 | 9.86 | 9.14 | 9.50 |
| | f34 | -15.70 | -13.20 | -11.63 | -11.97 |

(continued)

| | | Imaging device 1000 of FIG. 24 | Imaging device 1100 of FIG. 28 | Imaging device 1200 of FIG. 32 | Imaging device 1300 of FIG. 36 |
|---|---|---|---|---|---|
| Refractive index (nd) | L1 | 1.593 | 1.497 | 1.497 | 1.497 |
| | L2 | 1.544 | 1.544 | 1.616 | 1.616 |
| | L3 | 1.615 | 1.615 | 1.615 | 1.620 |
| | L4 | 1.680 | 1.680 | 1.680 | 1.567 |
| | L5 | N/A | N/A | N/A | 1.567 |
| | Prism | 1.550 | 1.550 | 1.550 | 1.550 |
| Abbe number (Abv) | L1 | 67.1 | 81.5 | 81.5 | 81.5 |
| | L2 | 55.9 | 37.4 | 25.8 | 25.8 |
| | L3 | 18.1 | 18.1 | 18.1 | 18.1 |
| | L4 | 19.2 | 19.2 | 19.2 | 19.0 |
| | L5 | N/A | N/A | N/A | 37.4 |
| | Prism | 40.0 | 37.4 | 35.0 | 35.0 |
| Calculated value of Equation 1 | | -0.852 | -0.774 | -0.647 | -0.667 |

More specific data regarding the shape and arrangement of the imaging device 600 and/or the lens assembly LA of FIG. 8 are exemplified in Tables 3, 4, and/or 5. The data in Table 3 may additionally exemplify the radii of curvature of lens surfaces and the thicknesses and arrangement intervals of the lenses L1, L2, L3, and L4 at points where the optical axis A intersects. Tables 4 and/or 5 represent aspherical coefficients of the lenses L1, L2, L3, and L4, and the definition of the aspherical surface may be calculated through the following Equation 2.

[Equation 2]

$$z = \frac{c'y^2}{1+\sqrt{1-(k+1)c'^2y^2}} + Ay^4 + By^6 + Cy^8 + Dy^{10} + Ey^{12} + Fy^{14} + Gy^{16} + Hy^{18} + Jy^{20} + Ky^{22} + Ly^{24} + My^{26} + Ny^{28} + Oy^{30}$$

In Equation 2, "z" denotes a distance in the direction of the optical axis A from a point on a lens surface through which the optical axis A passes, and "y" denotes a distance in a direction perpendicular to the optical axis A from the optical axis A. "c" denotes the reciprocal of the radius of curvature at the vertex of the lens, "k" denotes a conic constant, and "A," "B," "C," "D," "E," "F," "G," "H," "J," "K," "L," "M," "N," and "O" may respectively denote aspherical coefficients. The "reciprocal of the radius of curvature" may represent a value indicating the degree of curvature at each point of a curved surface or curve (e.g., curvature).

[Table 3]

| Lens surface | Curvature radius | Thickness (air gap) | Refractive index (nd) | Abbe number (Vd) |
|---|---|---|---|---|
| obj | infinity | infinity | | |
| STOP | infinity | -0.500 | | |
| S2 | 9.229 | 1.717 | 1.593 | 55.9 |
| S3 | -88.644 | 0.100 | | |
| S4 | 5.091 | 0.807 | 1.544 | 55.9 |
| S5 | 7.406 | 0.100 | | |
| S6 | 2.868 | 0.500 | 1.615 | 18.1 |
| S7 | 2.156 | 1.257 | | |
| S8 | -7.529 | 0.430 | 1.680 | 19.2 |
| S9 | -10.214 | 0.589 | | |

(continued)

| Lens surface | Curvature radius | Thickness (air gap) | Refractive index (nd) | Abbe number (Vd) |
|---|---|---|---|---|
| S10 | infinity | 10.870 | 1.550 | 40.1 |
| S11 | infinity | 0.100 | | |
| S12 | infinity | 0.210 | 1.520 | 64.1 |
| S13 | infinity | 2.961 | | |
| img | infinity | -0.005 | | |

[Table 4]

| Lens surface | 2_ASP | 3_ASP | 4_ASP | 5_ASP |
|---|---|---|---|---|
| Curvature radius | 9.229E+00 | -8.864E+01 | 5.091E+00 | 7.406E+00 |
| k (Conic) | 0.000E+00 | 0.000E+00 | 2.496E-01 | -2.702E+00 |
| A (4th) | 3.093E-04 | 8.365E-04 | 1.238E-03 | 6.268E-03 |
| B (6th) | -1.656E-05 | -5.374E-05 | 1.698E-03 | 1.903E-03 |
| C (8th) | -1.503E-06 | -4.380E-06 | -8.692E-04 | -1.218E-03 |
| D (10th) | 1.985E-07 | 5.460E-07 | 2.894E-04 | 4.707E-04 |
| E (12th) | 0.000E+00 | 0.000E+00 | -5.146E-05 | -9.536E-05 |
| F (14th) | 0.000E+00 | 0.000E+00 | 4.736E-06 | 1.006E-05 |
| G (16th) | 0.000E+00 | 0.000E+00 | -1.791E-07 | -4.504E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

[Table 5]

| Lens surface | 6_ASP | 7_ASP | 8_ASP | 9_ASP |
|---|---|---|---|---|
| Curvature radius | 2.868E+00 | 2.156E+00 | -7.529E+00 | -1.021E+01 |
| k (Conic) | -2.654E-01 | -9.750E-01 | -3.322E-01 | 4.129E+00 |
| A (4th) | -9.507E-03 | -1.049E-02 | 1.647E-02 | 1.587E-02 |
| B (6th) | 4.579E-04 | 1.739E-03 | 3.835E-04 | 4.031E-04 |
| C (8th) | -2.778E-04 | -5.047E-04 | 2.012E-04 | 1.198E-04 |
| D (10th) | 9.361E-06 | 6.700E-05 | 4.374E-06 | 4.631E-05 |
| E (12th) | 1.462E-06 | -3.524E-07 | -1.688E-05 | -3.063E-05 |
| F (14th) | 1.729E-07 | -7.879E-07 | 3.279E-06 | 6.264E-06 |
| G (16th) | -2.426E-08 | 7.908E-08 | -2.339E-07 | -4.986E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |

(continued)

| Lens surface | 6_ASP | 7_ASP | 8_ASP | 9_ASP |
|---|---|---|---|---|
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

In embodiments described below, reference numerals for the optical axis(or axes), the lens(or lenses), and/or the lens surface(s) may be omitted from the drawings for brevity. Reference numerals omitted in the drawings may be easily understood by those skilled in the art by further referring to FIG. 8 or through the lens data and drawings presented in each embodiment.

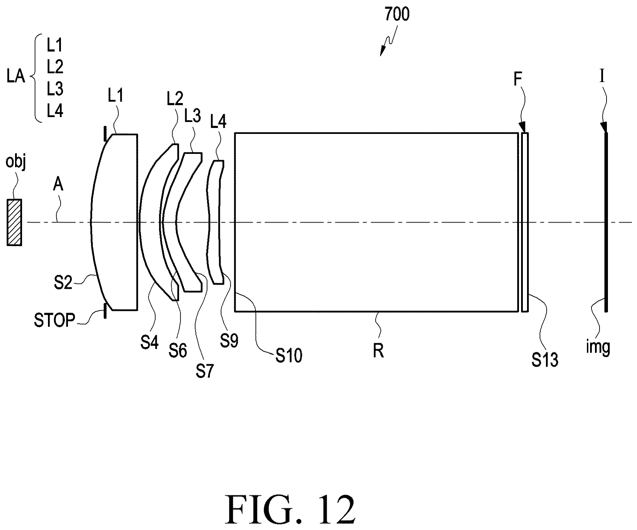

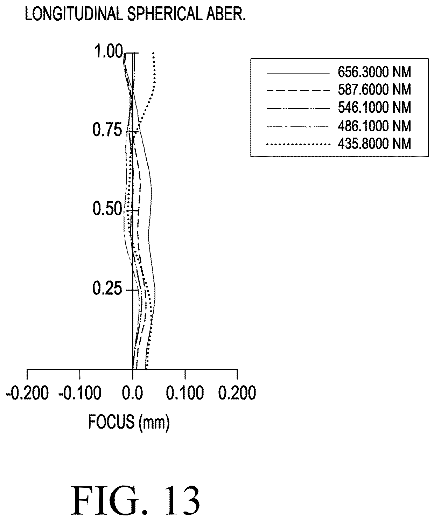

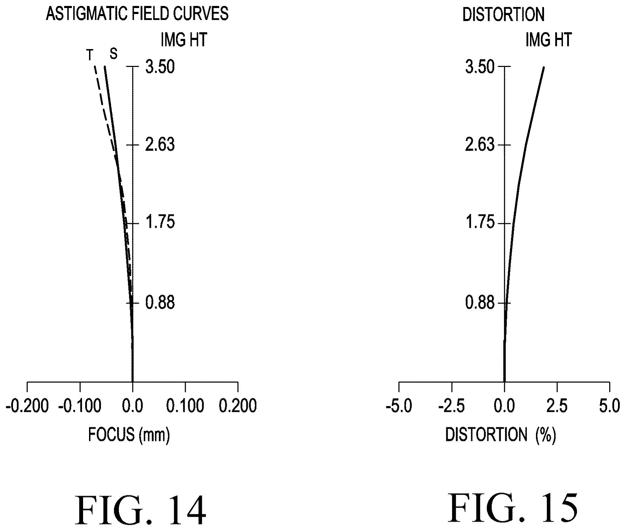

FIG. 12 is a view illustrating an imaging device 700 (e.g., the camera module 180, 205, 212, or 213 of FIGS. 1 to 3 or the imaging device 500 of FIG. 6) according to an embodiment of the disclosure. FIG. 13 is a graph illustrating the spherical aberration of the imaging device 700 of FIG. 12 according to an embodiment of the disclosure. FIG. 14 is a graph illustrating the astigmatism of the imaging device 700 of FIG. 12 according to an embodiment of the disclosure. FIG. 15 is a graph illustrating the distortion of the imaging device 700 of FIG. 12 according to an embodiment of the disclosure.

Referring to FIGS. 12 to 15, the imaging device 700 may be manufactured to correspond to the data of Table 6 regarding the radii of curvature of lens surfaces, and the thicknesses and arrangement intervals of the lenses L1, L2, L3, and L4, in addition to the specifications of Tables 1 and 2 described above, and may have the aspherical coefficients of Table 7 and/or Table 8. In an embodiment, the imaging device 700 may satisfy at least some of the above-described conditions, such as those of Equation 1.

[Table 6]

| Lens surface | Curvature radius | Thickness (air gap) | Refractive index (nd) | Abbe number (Vd) |
|---|---|---|---|---|
| obj | infinity | infinity | | |
| STOP | infinity | -0.500 | | |
| S2 | 10.058 | 1.634 | 1.544 | 55.9 |
| S3 | -38.130 | 0.100 | | |
| S4 | 5.091 | 0.807 | 1.544 | 55.9 |
| S5 | 7.406 | 0.100 | | |
| S6 | 2.935 | 0.459 | 1.680 | 18.1 |
| S7 | 2.121 | 1.257 | | |
| S8 | -6.031 | 0.701 | 1.640 | 23.5 |
| S9 | -5.895 | 0.589 | | |
| S10 | infinity | 10.870 | 1.520 | 64.1 |
| S11 | infinity | 0.100 | | |
| S12 | infinity | 0.210 | 1.520 | 64.1 |
| S13 | infinity | 3.707 | | |
| img | infinity | -0.005 | | |

[Table 7]

| Lens surface | 2_ASP | 3_ASP | 4_ASP | 5_ASP |
|---|---|---|---|---|
| Curvature radius | 1.006E+01 | -3.813E+01 | 5.091E+00 | 7.406E+00 |
| k (Conic) | 0.000E+00 | 0.000E+00 | 2.496E-01 | -2.702E+00 |
| A (4th) | 7.702E-04 | 1.439E-03 | -9.167E-05 | 6.582E-03 |
| B (6th) | 3.671E-05 | -1.098E-05 | 1.573E-03 | 1.727E-03 |
| C (8th) | -2.775E-06 | 4.372E-07 | -8.776E-04 | -1.248E-03 |

(continued)

| Lens surface | 2_ASP | 3_ASP | 4_ASP | 5_ASP |
|---|---|---|---|---|
| D (10th) | 6.521E-07 | 1.039E-06 | 2.855E-04 | 4.693E-04 |
| E (12th) | 0.000E+00 | 0.000E+00 | -5.154E-05 | -9.583E-05 |
| F (14th) | 0.000E+00 | 0.000E+00 | 4.761E-06 | 9.979E-06 |
| G (16th) | 0.000E+00 | 0.000E+00 | -1.840E-07 | -4.445E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

[Table 8]

| Lens surface | 6_ASP | 7_ASP | 8_ASP | 9_ASP |
|---|---|---|---|---|
| Curvature radius | 2.935E+00 | 2.121E+00 | -6.031E+00 | -5.895E+00 |
| k (Conic) | -2.654E-01 | -9.750E-01 | -3.322E-01 | 4.129E+00 |
| A (4th) | -9.507E-03 | -1.049E-02 | 1.124E-02 | 1.051E-02 |
| B (6th) | 4.579E-04 | 1.739E-03 | 7.505E-04 | 5.981E-04 |
| C (8th) | -2.778E-04 | -5.047E-04 | 2.601E-04 | 1.425E-04 |
| D (10th) | 9.361E-06 | 6.700E-05 | 3.901E-06 | 6.113E-05 |
| E (12th) | 1.462E-06 | -3.524E-07 | -1.681E-05 | -3.157E-05 |
| F (14th) | 1.729E-07 | -7.879E-07 | 3.512E-06 | 5.716E-06 |
| G (16th) | -2.426E-08 | 7.908E-08 | -2.312E-07 | -2.704E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

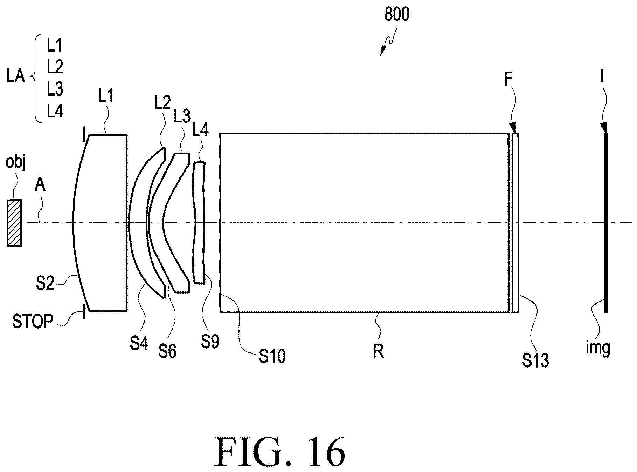

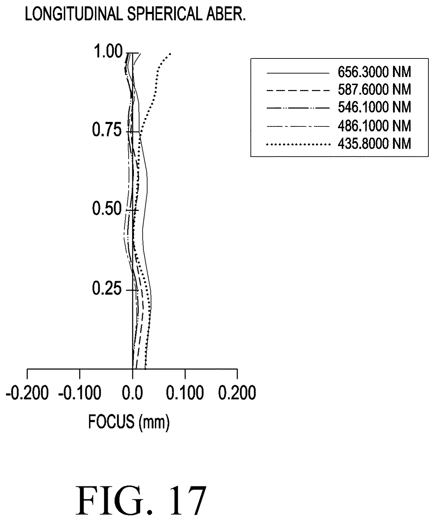

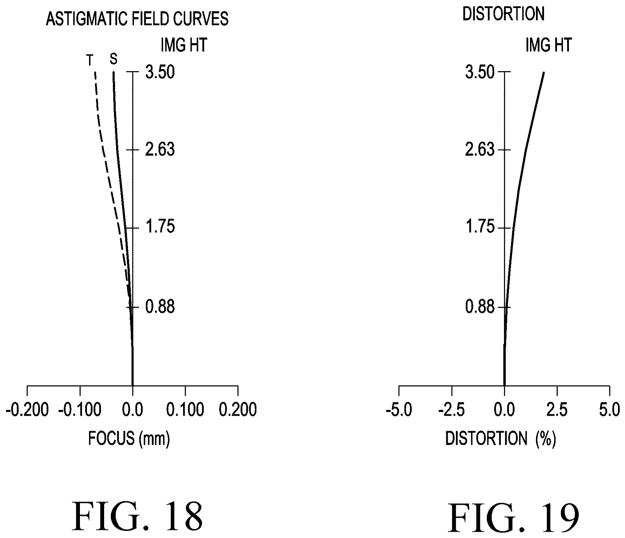

FIG. 16 is a view illustrating an imaging device 800 (e.g., the camera module 180, 205, 212, or 213 in FIGS. 1 to 3 and/or the imaging device 500 in FIG. 6) according to an embodiment of the disclosure. FIG. 17 is a graph illustrating the spherical aberration of the imaging device 800 of FIG. 16 according to an embodiment of the disclosure. FIG. 18 is a graph illustrating the astigmatism of the imaging device 800 of FIG. 16 according to an embodiment of the disclosure. FIG. 19 is a graph illustrating the distortion of the imaging device 800 of FIG. 16 according to an embodiment of the disclosure.

Referring to FIGS. 16 to 19, the imaging device 800 may be manufactured to correspond to the data of Table 9 regarding the radii of curvature of lens surfaces, and the thicknesses and arrangement intervals of the lenses L1, L2, L3, and L4, in addition to the specifications of Tables 1 and 2 described above, and may have the aspherical coefficients of Table 10 and/or Table 11. In an embodiment, the imaging device 800 may satisfy at least some of the above-described conditions, such as those of Equation 1.

[Table 9]

| Lens surface | Curvature radius | Thickness (air gap) | Refractive index (nd) | Abbe number (Vd) |
|---|---|---|---|---|
| obj | infinity | infinity | | |
| STOP | infinity | -0.450 | | |
| S2 | 9.229 | 2.013 | 1.593 | 55.9 |
| S3 | -88.644 | 0.100 | | |
| S4 | 5.091 | 0.693 | 1.544 | 55.9 |
| S5 | 7.406 | 0.100 | | |
| S6 | 2.735 | 0.495 | 1.620 | 18.1 |
| S7 | 2.045 | 1.205 | | |
| S8 | -6.688 | 0.350 | 1.680 | 19.2 |
| S9 | -8.098 | 0.589 | | |
| S10 | infinity | 10.870 | 1.590 | 35.1 |
| S11 | infinity | 0.100 | | |
| S12 | infinity | 0.210 | 1.520 | 62.1 |
| S13 | infinity | 3.337 | | |
| img | infinity | -0.005 | | |

[Table 10]

| Lens surface | 2_ASP | 3_ASP | 4_ASP | 5_ASP |
|---|---|---|---|---|
| Curvature radius | 9.229E+00 | -8.864E+01 | 5.091E+00 | 7.406E+00 |
| k (Conic) | 0.000E+00 | 0.000E+00 | 2.496E-01 | -2.702E+00 |
| A (4th) | 1.568E-04 | 1.075E-03 | 2.085E-03 | 7.167E-03 |
| B (6th) | -1.453E-05 | -4.220E-05 | 1.793E-03 | 1.905E-03 |
| C (8th) | -2.067E-07 | -4.010E-06 | -8.650E-04 | -1.228E-03 |
| D (10th) | 1.750E-07 | 7.010E-07 | 2.894E-04 | 4.700E-04 |
| E (12th) | 0.000E+00 | 0.000E+00 | -5.146E-05 | -9.521E-05 |
| F (14th) | 0.000E+00 | 0.000E+00 | 4.745E-06 | 1.010E-05 |
| G (16th) | 0.000E+00 | 0.000E+00 | -1.754E-07 | -4.465E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

[Table 11]

| Lens surface | 6_ASP | 7_ASP | 8_ASP | 9_ASP |
|---|---|---|---|---|
| Curvature radius | 2.735E+00 | 2.045E+00 | -6.688E+00 | -8.098E+00 |
| k (Conic) | -2.654E-01 | -9.750E-01 | -3.322E-01 | 4.129E+00 |
| A (4th) | -9.507E-03 | -1.049E-02 | 1.447E-02 | 1.470E-02 |

(continued)

| Lens surface | 6_ASP | 7_ASP | 8_ASP | 9_ASP |
|---|---|---|---|---|
| B (6th) | 4.579E-04 | 1.739E-03 | 1.798E-04 | 3.212E-04 |
| C (8th) | -2.778E-04 | -5.047E-04 | 1.714E-04 | 9.594E-05 |
| D (10th) | 9.361E-06 | 6.700E-05 | -1.679E-07 | 4.046E-05 |
| E (12th) | 1.462E-06 | -3.524E-07 | -1.712E-05 | -3.207E-05 |
| F (14th) | 1.729E-07 | -7.879E-07 | 3.254E-06 | 6.064E-06 |
| G (16th) | -2.426E-08 | 7.908E-08 | -2.845E-07 | -4.730E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

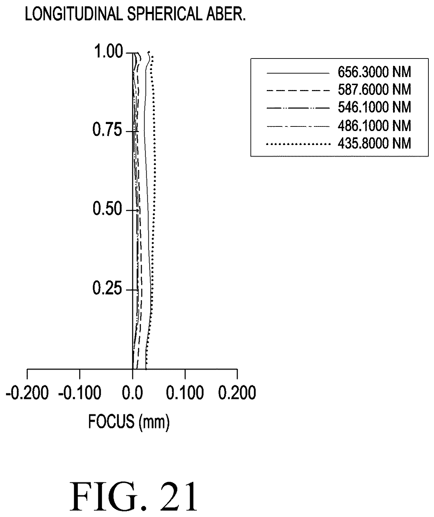

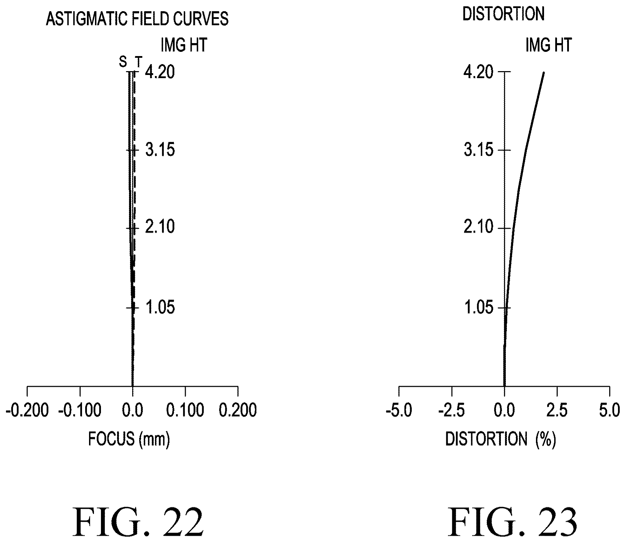

FIG. 20 is a view illustrating an imaging device 900 (e.g., the camera module 180, 205, 212, or 213 in FIGS. 1 to 3 or the imaging device 500 in FIG. 6) according to an embodiment of the disclosure. FIG. 21 is a graph illustrating the spherical aberration of the imaging device 900 of FIG. 20 according to an embodiment of the disclosure. FIG. 22 is a graph illustrating the astigmatism of the imaging device 900 of FIG. 20 according to an embodiment of the disclosure. FIG. 23 is a graph illustrating the distortion of the imaging device 900 of FIG. 20 according to an embodiment of the disclosure.

Referring to FIGS. 20 to 23, the imaging device 900 may be manufactured to correspond to the data of Table 12 regarding the radii of curvature of lens surfaces, and the thicknesses and arrangement intervals of the lenses L1, L2, L3, L4, and L5 in addition to the specifications of Tables 1 and 2 described above, and may have the aspherical coefficients of Table 13 and/or Table 14. In an embodiment, the imaging device 900 may satisfy at least some of the above-described conditions, such as those of Equation 1.

[Table 12]

| Lens surface | Curvature radius | Thickness (air gap) | Refractive index (nd) | Abbe number (Vd) |
|---|---|---|---|---|
| obj | infinity | infinity | | |
| S1 | 7.105195799 | 1.096 | 1.544 | 55.9 |
| STOP (S2) | -76.349 | 0.100 | | |
| S3 | 9.836 | 0.803 | 1.544 | 55.9 |
| S4 | 25.987 | 0.100 | | |
| S5 | 56.853 | 2.148 | 1.620 | 25.8 |
| S6 | 11.978 | 0.115 | | |
| S7 | 33.243 | 1.348 | 1.680 | 19.0 |
| S8 | 19.448 | 0.256 | | |
| S9 | -19.014 | 0.380 | 1.567 | 37.4 |
| S10 | 19.766 | 0.300 | | |
| S11 | infinity | 13.000 | 1.544 | 64.1 |
| S12 | infinity | 0.100 | | |
| S13 | infinity | 0.210 | 1.520 | 64.1 |
| S14 | infinity | 1.743 | | |

(continued)

| Lens surface | Curvature radius | Thickness (air gap) | Refractive index (nd) | Abbe number (Vd) |
|---|---|---|---|---|
| img | infinity | 0.007 | | |

[Table 13]

| Lens surface | 1_ASP | 2_ASP | 3_ASP | 4_ASP | 5_ASP |
|---|---|---|---|---|---|
| Curvature radius | 7.105E+00 | -7.635E+01 | 9.836E+00 | 2.599E+01 | 5.685E+01 |
| k (Conic) | -5.097E-01 | -1.000E+00 | 0.000E+00 | 0.000E+00 | 0.000E+00 |
| A (4th) | -4.562E-04 | -7.997E-05 | 5.776E-05 | -7.370E-04 | 2.635E-04 |
| B (6th) | 6.199E-05 | -6.570E-04 | -8.871E-04 | -3.028E-04 | 7.011E-06 |
| C (8th) | -7.902E-05 | 4.624E-04 | 5.959E-04 | 1.675E-04 | -1.033E-06 |
| D (10th) | 3.483E-05 | -1.122E-04 | -1.322E-04 | -2.821E-05 | -1.648E-07 |
| E (12th) | -7.239E-06 | 1.644E-05 | 1.517E-05 | 1.939E-06 | -1.337E-08 |
| F (14th) | 9.078E-07 | -1.745E-06 | -1.014E-06 | -2.223E-08 | 2.051E-10 |
| G (16th) | -7.391E-08 | 1.277E-07 | 3.998E-08 | -4.009E-09 | -1.469E-11 |
| H (18th) | 3.864E-09 | -3.665E-09 | -8.627E-10 | 2.020E-10 | 6.058E-12 |
| J (20th) | -1.176E-10 | -3.043E-10 | 7.870E-12 | -2.962E-12 | 1.299E-13 |
| K (22nd) | 1.569E-12 | 3.174E-11 | 0.000E+00 | 0.000E+00 | 0.000E+00 |
| L (24th) | 0.000E+00 | -8.618E-13 | 0.000E+00 | 0.000E+00 | 0.000E+00 |
| M (26th) | 0.000E+00 | 0.000E+00 | 0.000E+00 | 0.000E+00 | 0.000E+00 |
| N (28th) | 0.000E+00 | 0.000E+00 | 0.000E+00 | 0.000E+00 | 0.000E+00 |
| O (30th) | 0.000E+00 | 0.000E+00 | 0.000E+00 | 0.000E+00 | 0.000E+00 |

[Table 14]

| Lens surface | 6_ASP | 7_ASP | 8_ASP | 9_ASP | 10_ASP |
|---|---|---|---|---|---|
| Curvature radius | 1.198E+01 | 1.945E+01 | 1.945E+01 | -1.901E+01 | 1.977E+01 |
| k (Conic) | 0.000E+00 | 0.000E+00 | 0.000E+00 | -1.000E+00 | -9.900E+01 |
| A (4th) | -3.366E-04 | 1.300E-03 | 1.300E-03 | 3.757E-03 | 7.733E-03 |
| B (6th) | -5.029E-05 | 2.364E-04 | 2.364E-04 | -6.693E-04 | -9.853E-04 |
| C (8th) | -1.686E-06 | 4.260E-05 | 4.260E-05 | -6.113E-04 | -3.848E-04 |
| D (10th) | 4.789E-07 | 6.775E-06 | 6.775E-06 | 6.236E-04 | 4.352E-04 |
| E (12th) | 1.177E-07 | 1.027E-06 | 1.027E-06 | -3.164E-04 | -2.276E-04 |
| F (14th) | 1.527E-09 | 8.826E-08 | 8.826E-08 | 9.745E-05 | 7.050E-05 |
| G (16th) | -2.519E-09 | -2.703E-08 | -2.703E-08 | -1.842E-05 | -1.362E-05 |
| H (18th) | -6.334E-10 | 2.736E-18 | 2.736E-18 | 2.060E-06 | 1.615E-06 |
| J (20th) | -3.467E-11 | 4.255E-20 | 4.255E-20 | -1.244E-07 | -1.087E-07 |
| K (22nd) | 0.000E+00 | 0.000E+00 | 0.000E+00 | 3.120E-09 | 3.228E-09 |
| L (24th) | 0.000E+00 | 0.000E+00 | 0.000E+00 | 0.000E+00 | 0.000E+00 |
| M (26th) | 0.000E+00 | 0.000E+00 | 0.000E+00 | 0.000E+00 | 0.000E+00 |
| N (28th) | 0.000E+00 | 0.000E+00 | 0.000E+00 | 0.000E+00 | 0.000E+00 |
| O (30th) | 0.000E+00 | 0.000E+00 | 0.000E+00 | 0.000E+00 | 0.000E+00 |

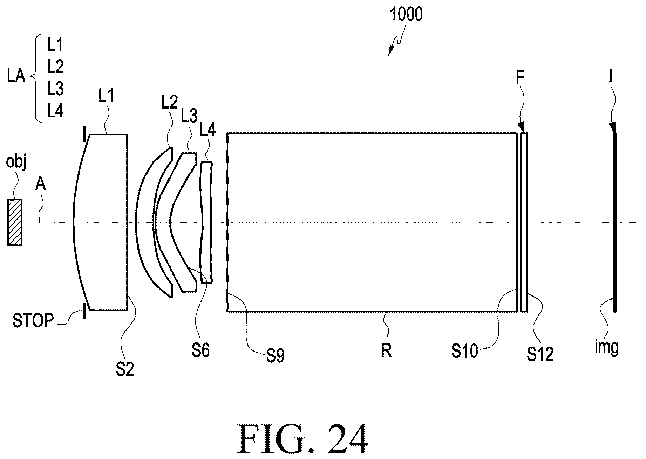

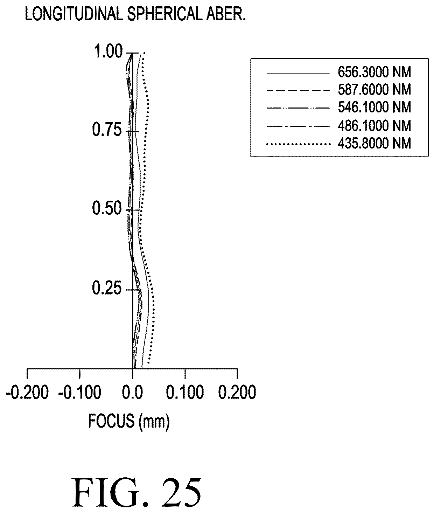

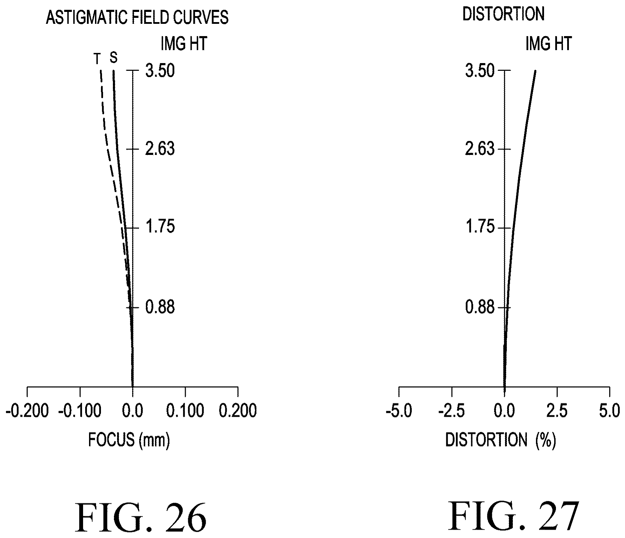

FIG. 24 is a view illustrating an imaging device 1000 (e.g., the camera module 180, 205, 212, or 213 of FIGS. 1 to 3 or the imaging device 500 of FIG. 6) according to an embodiment of the disclosure. FIG. 25 is a graph illustrating the spherical aberration of the imaging device 1000 of FIG. 24 according to an embodiment of the disclosure. FIG. 26 is a graph illustrating the astigmatism of the imaging device 1000 of FIG. 24 according to an embodiment of the disclosure. FIG. 27 is a graph illustrating the distortion of the imaging device 1000 of FIG. 24 according to an embodiment of the disclosure.

Referring to FIGS. 24 to 27, the imaging device 1000 may be manufactured to correspond to the data of Table 15 regarding the radii of curvature of lens surfaces, and the thicknesses and arrangement intervals of the lenses L1, L2, L3, and L4 in addition to the specifications of Tables 1 and 2 described above, and may have the aspherical coefficients of Table 16 and/or Table 17. In an embodiment, the imaging device 1000 may satisfy at least some of the above-described conditions, such as those of Equation 1.

[Table 15]

| Lens surface | Curvature radius | Thickness (air gap) | Refractive index (nd) | Abbe number (Vd) |
|---|---|---|---|---|
| obj | infinity | infinity | | |
| STOP (S1) | 8.835 | 1.925 | 1.593 | 67.1 |
| S2 | -197.106 | 0.266 | | |
| S3 | 4.890 | 0.678 | 1.544 | 55.9 |
| S4 | 6.488 | 0.100 | | |
| S5 | 2.734 | 0.485 | 1.616 | 18.1 |
| S6 | 2.109 | 1.161 | | |
| S7 | -6.753 | 0.372 | 1.680 | 19.2 |
| S8 | -8.318 | 0.589 | | |
| S9 | infinity | 10.870 | 1.550 | 40.1 |
| S10 | infinity | 0.100 | | |
| S11 | infinity | 0.210 | 1.520 | 64.1 |
| S12 | infinity | 0.000 | | |
| S13 | infinity | 3.100 | | |
| Img | infinity | -0.005 | | |

[Table 16]

| Lens surface | 1_ASP | 2_ASP | 3_ASP | 4_ASP |
|---|---|---|---|---|
| Curvature radius | 8.835E+00 | -1.971E+02 | 4.890E+00 | 6.488E+00 |
| k (Conic) | 0.000E+00 | 0.000E+00 | 2.496E-01 | -2.702E+00 |
| A (4th) | 4.188E-04 | 9.480E-04 | 1.433E-03 | 7.121E-03 |
| B (6th) | -1.425E-05 | -3.260E-05 | 1.708E-03 | 1.859E-03 |
| C (8th) | -5.539E-07 | -2.151E-06 | -8.685E-04 | -1.228E-03 |
| D (10th) | 2.455E-07 | 7.297E-07 | 2.889E-04 | 4.709E-04 |
| E (12th) | 0.000E+00 | 0.000E+00 | -5.145E-05 | -9.529E-05 |
| F (14th) | 0.000E+00 | 0.000E+00 | 4.747E-06 | 1.007E-05 |
| G (16th) | 0.000E+00 | 0.000E+00 | -1.777E-07 | -4.449E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |

(continued)

| Lens surface | 1_ASP | 2_ASP | 3_ASP | 4_ASP |
|---|---|---|---|---|
| N (28th) | 0.000E+00 | 0.000E+00 | 0.000E+00 | 0.000E+00 |
| O (30th) | 0.000E+00 | 0.000E+00 | 0.000E+00 | 0.000E+00 |

[Table 17]

| Lens surface | 5_ASP | 6_ASP | 7_ASP | 8_ASP |
|---|---|---|---|---|
| Curvature radius | 2.734E+00 | 2.109E+00 | -6.753E+00 | -8.318E+00 |
| k (Conic) | -2.654E-01 | -9.750E-01 | -3.322E-01 | 4.129E+00 |
| A (4th) | -9.507E-03 | -1.049E-02 | 1.574E-02 | 1.598E-02 |
| B (6th) | 4.579E-04 | 1.739E-03 | 3.473E-04 | 4.207E-04 |
| C (8th) | -2.778E-04 | -5.047E-04 | 1.926E-04 | 1.153E-04 |
| D (10th) | 9.361E-06 | 6.700E-05 | 2.890E-06 | 4.582E-05 |
| E (12th) | 1.462E-06 | -3.524E-07 | -1.684E-05 | -3.128E-05 |
| F (14th) | 1.729E-07 | -7.879E-07 | 3.279E-06 | 6.078E-06 |
| G (16th) | -2.426E-08 | 7.908E-08 | -2.704E-07 | -4.998E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

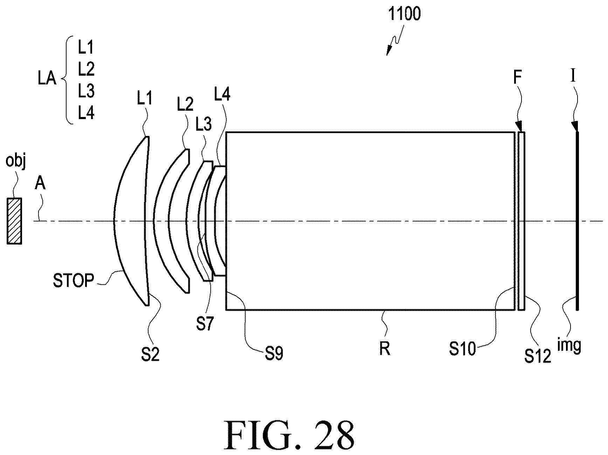

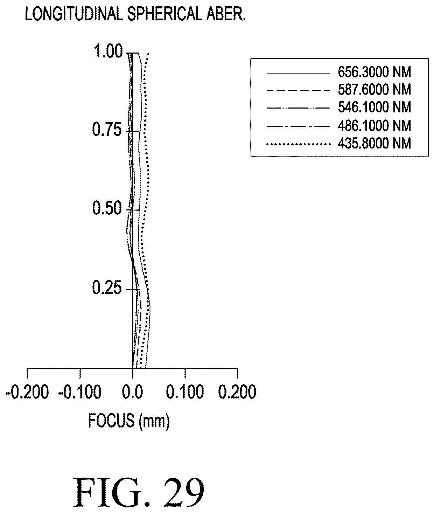

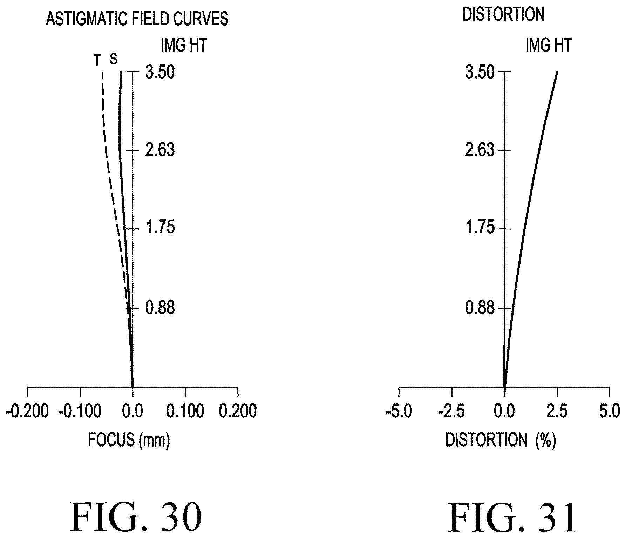

FIG. 28 is a view illustrating an imaging device 1100 (e.g., the camera module 180, 205, 212, or 213 in FIGS. 1 to 3 or the imaging device 500 in FIG. 6) according to an embodiment of the disclosure. FIG. 29 is a graph illustrating the spherical aberration of the imaging device 1100 of FIG. 28 according to an embodiment of the disclosure. FIG. 30 is a graph illustrating the astigmatism of the imaging device 1100 of FIG. 28 according to an embodiment of the disclosure. FIG. 31 is a graph illustrating the distortion of the imaging device 1100 of FIG. 28 according to an embodiment of the disclosure.

Referring to FIGS. 28 to 31, the imaging device 1100 may be manufactured to correspond to the data of Table 18 regarding the radii of curvature of lens surfaces, and the thicknesses and arrangement intervals of the lenses L1, L2, L3, and L4 in addition to the specifications of Tables 1 and 2 described above, and may have the aspherical coefficients of Table 19 and/or Table 20. In an embodiment, the imaging device 1100 may satisfy at least some of the above-described conditions, such as those of Equation 1.

[Table 18]

| Lens surface | Curvature radius | Thickness (air gap) | Refractive index (nd) | Abbe number (Vd) |
|---|---|---|---|---|
| obj | infinity | infinity | | |
| STOP (S1) | 5.190 | 1.244 | 1.497 | 81.5 |
| S2 | 29.003 | 0.367 | | |
| S3 | 5.025 | 0.629 | 1.616 | 37.4 |
| S4 | 5.710 | 0.686 | | |
| S5 | 3.115 | 0.510 | 1.616 | 18.1 |
| S6 | 2.833 | 0.300 | | |
| S7 | 23.571 | 0.360 | 1.680 | 19.2 |

(continued)

| Lens surface | Curvature radius | Thickness (air gap) | Refractive index (nd) | Abbe number (Vd) |
|---|---|---|---|---|
| S8 | 6.627 | 0.450 | | |
| S9 | infinity | 12.000 | 1.550 | 35.1 |
| S10 | infinity | 0.100 | | |
| S11 | infinity | 0.210 | 1.520 | 64.1 |
| S12 | infinity | 0.000 | | |
| S13 | infinity | 1.949 | | |
| Img | infinity | -0.005 | | |

[Table 19]

| Lens surface | 1_ASP | 2_ASP | 3_ASP | 4_ASP |
|---|---|---|---|---|
| Curvature radius | 5.190E+00 | 2.900E+01 | 5.025E+00 | 5.710E+00 |
| k (Conic) | 0.000E+00 | 0.000E+00 | 2.496E-01 | -2.702E+00 |
| A (4th) | 3.433E-04 | -1.415E-05 | 3.079E-03 | 8.225E-03 |
| B (6th) | -6.386E-06 | -2.145E-05 | 1.609E-03 | 2.282E-03 |
| C (8th) | 7.130E-07 | -4.697E-06 | -8.447E-04 | -1.225E-03 |
| D (10th) | -8.155E-08 | 1.502E-07 | 2.858E-04 | 4.835E-04 |
| E (12th) | -1.734E-08 | 1.763E-09 | -5.134E-05 | -9.505E-05 |
| F (14th) | -2.726E-10 | 1.508E-09 | 4.810E-06 | 9.854E-06 |
| G (16th) | 2.182E-11 | 3.154E-10 | -1.855E-07 | -4.362E-07 |
| H (18th) | 9.040E-12 | 2.817E-11 | 0.000E+00 | 0.000E+00 |
| J (20th) | 3.217E-12 | -1.604E-12 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

[Table 20]

| Lens surface | 5_ASP | 6_ASP | 7_ASP | 8_ASP |
|---|---|---|---|---|
| Curvature radius | 3.115E+00 | 2.833E+00 | 2.357E+01 | 6.627E+00 |
| k (Conic) | -2.654E-01 | -9.750E-01 | -3.322E-01 | 4.129E+00 |
| A (4th) | -7.640E-03 | -1.228E-02 | 1.125E-02 | 1.602E-02 |
| B (6th) | 4.684E-04 | 1.695E-03 | 2.434E-05 | -5.003E-04 |
| C (8th) | -2.813E-04 | -4.566E-04 | 1.312E-04 | 7.046E-06 |
| D (10th) | 1.108E-05 | 7.510E-05 | 2.550E-06 | 3.443E-05 |
| E (12th) | 1.954E-06 | 1.031E-06 | -1.457E-05 | -3.536E-05 |
| F (14th) | 2.395E-07 | -3.506E-07 | 3.706E-06 | 5.334E-06 |
| G (16th) | -1.610E-08 | 1.759E-07 | -2.429E-07 | -3.145E-07 |
| H (18th) | 0.000E+00 | 0.000E+00 | 0.000E+00 | 0.000E+00 |
| J (20th) | 0.000E+00 | 0.000E+00 | 0.000E+00 | 0.000E+00 |

(continued)

| Lens surface | 5_ASP | 6_ASP | 7_ASP | 8_ASP |
|---|---|---|---|---|
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

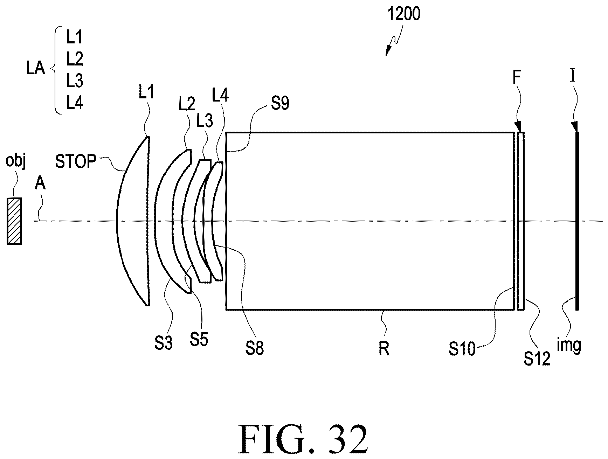

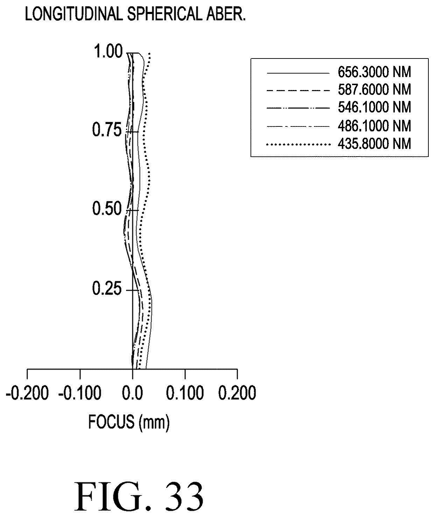

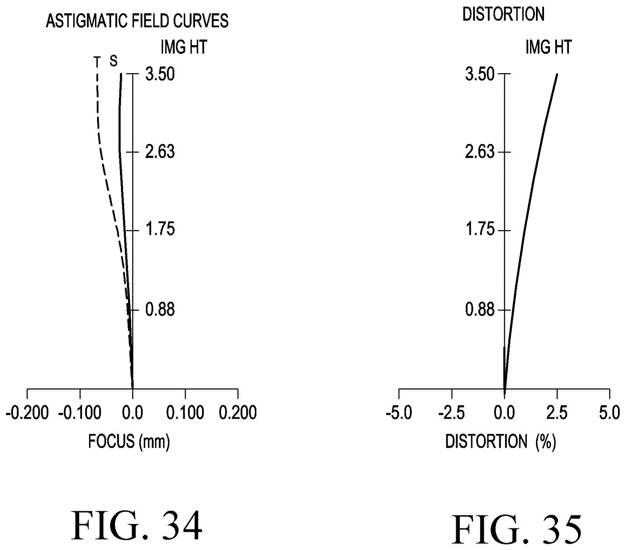

FIG. 32 is a view illustrating an imaging device 1200 (e.g., the camera module 180, 205, 212, or 213 of FIGS. 1 to 3 or the imaging device 500 of FIG. 6) according to an embodiment of the disclosure. FIG. 33 is a graph illustrating the spherical aberration of the imaging device 1200 of FIG. 32 according to an embodiment of the disclosure. FIG. 34 is a graph illustrating the astigmatism of the imaging device 1200 of FIG. 32 according to an embodiment of the disclosure. FIG. 35 is a graph illustrating the distortion of the imaging device 1200 of FIG. 32 according to an embodiment of the disclosure.

Referring to FIGS. 32 to 35, the imaging device 1200 may be manufactured to correspond to the data of Table 21 regarding the radii of curvature of lens surfaces, and the thicknesses and arrangement intervals of the lenses L1, L2, L3, and L4, in addition to the specifications of Tables 1 and 2 described above, and may have the aspherical coefficients of Table 22 and/or Table 23. In an embodiment, the imaging device 1200 may satisfy at least some of the above-described conditions, such as those of Equation 1.

[Table 21]

| Lens surface | Curvature radius | Thickness (air gap) | Refractive index (nd) | Abbe number (Vd) |
|---|---|---|---|---|
| obj | infinity | infinity | | |
| STOP (S1) | 5.304 | 1.235 | 1.497 | 81.5 |
| S2 | 73.080 | 0.329 | | |
| S3 | 5.302 | 0.690 | 1.616 | 25.8 |
| S4 | 6.074 | 0.397 | | |
| S5 | 3.051 | 0.503 | 1.616 | 18.1 |
| S6 | 2.601 | 0.361 | | |
| S7 | 31.305 | 0.360 | 1.680 | 19.2 |
| S8 | 7.509 | 0.589 | | |
| S9 | infinity | 12.000 | 1.550 | 35.1 |
| S10 | infinity | 0.100 | | |
| S11 | infinity | 0.210 | 1.520 | 64.1 |
| S12 | infinity | 0.000 | | |
| S13 | infinity | 2.032 | | |
| Img | infinity | -0.005 | | |

[Table 22]

| Lens surface | 1 ASP | 2 ASP | 3 ASP | 4 ASP |
|---|---|---|---|---|
| Curvature radius | 5.304E+00 | 7.308E+01 | 5.302E+00 | 6.074E+00 |
| k (Conic) | 0.000E+00 | 0.000E+00 | 2.496E-01 | -2.702E+00 |
| A (4th) | 3.492E-04 | 4.688E-04 | 2.727E-03 | 7.798E-03 |
| B (6th) | -2.414E-05 | -3.639E-05 | 1.662E-03 | 2.147E-03 |
| C (8th) | 7.760E-08 | -5.624E-06 | -8.568E-04 | -1.205E-03 |
| D (10th) | 1.900E-08 | 4.212E-07 | 2.875E-04 | 4.809E-04 |

(continued)

| Lens surface | 1 ASP | 2 ASP | 3 ASP | 4 ASP |
|---|---|---|---|---|
| E (12th) | -1.705E-08 | -5.131E-09 | -5.129E-05 | -9.496E-05 |
| F (14th) | -8.175E-10 | 1.131E-09 | 4.794E-06 | 9.941E-06 |
| G (16th) | -1.250E-12 | 2.642E-10 | -1.812E-07 | -4.474E-07 |
| H (18th) | 1.335E-11 | 2.550E-11 | 0.000E+00 | 0.000E+00 |
| J (20th) | 3.912E-12 | -3.698E-13 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

[Table 23]

| Lens surface | 5 ASP | 6 ASP | 7 ASP | 8 ASP |
|---|---|---|---|---|
| Curvature radius | 3.051E+00 | 2.601E+00 | 3.131E+01 | 7.509E+00 |
| k (Conic) | -2.654E-01 | -9.750E-01 | -3.322E-01 | 4.129E+00 |
| A (4th) | -8.195E-03 | -1.228E-02 | 1.257E-02 | 1.654E-02 |
| B (6th) | 4.062E-04 | 1.831E-03 | 1.035E-04 | -2.641E-04 |
| C (8th) | -2.860E-04 | -4.582E-04 | 1.618E-04 | -1.604E-05 |
| D (10th) | 8.864E-06 | 7.380E-05 | 3.574E-06 | 3.261E-05 |
| E (12th) | 1.696E-06 | 4.245E-07 | -1.518E-05 | -3.329E-05 |
| F (14th) | 2.283E-07 | -5.799E-07 | 3.604E-06 | 5.804E-06 |
| G (16th) | -1.893E-08 | 1.453E-07 | -2.851E-07 | -5.036E-07 |
| H (18th) | 1.409E-10 | 1.340E-08 | 0.000E+00 | 0.000E+00 |
| J (20th) | 1.010E-10 | 1.596E-10 | 0.000E+00 | 0.000E+00 |
| K (22nd) | 0.000E+00 | 0.000E+00 | 0.000E+00 | 0.000E+00 |
| L (24th) | 0.000E+00 | 0.000E+00 | 0.000E+00 | 0.000E+00 |
| M (26th) | 0.000E+00 | 0.000E+00 | 0.000E+00 | 0.000E+00 |
| N (28th) | 0.000E+00 | 0.000E+00 | 0.000E+00 | 0.000E+00 |
| O (30th) | 0.000E+00 | 0.000E+00 | 0.000E+00 | 0.000E+00 |

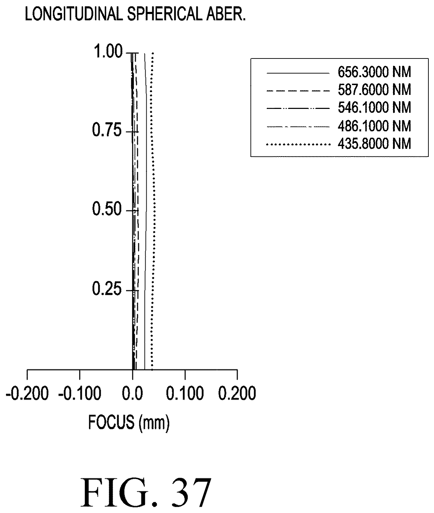

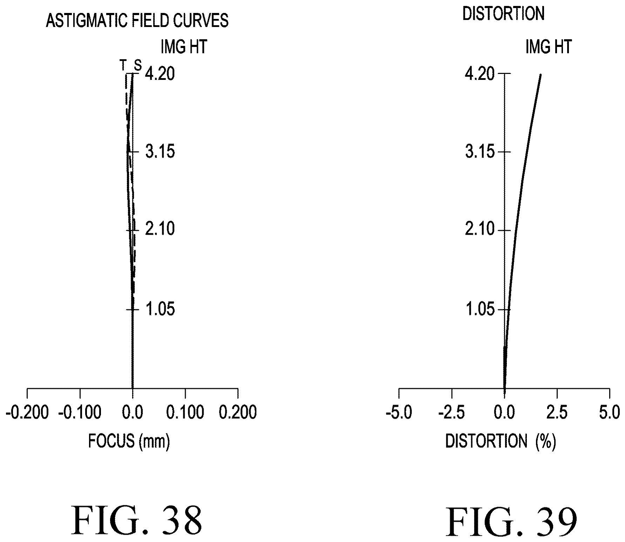

FIG. 36 is a view illustrating an imaging device 1300 (e.g., the camera module 180, 205, 212, or 213 in FIGS. 1 to 3 or the imaging device 500 in FIG. 6) according to an embodiment of the disclosure. FIG. 37 is a graph illustrating the spherical aberration of the imaging device 1300 of FIG. 36 according to an embodiment of the disclosure. FIG. 38 is a graph illustrating the astigmatism of the imaging device 1300 of FIG. 36 according to an embodiment of the disclosure. FIG. 39 is a graph illustrating the distortion of the imaging device 1300 of FIG. 36 according to an embodiment of the disclosure.

Referring to FIGS. 36 to 39, the imaging device 1300 may be manufactured to correspond to the data of Table 24 regarding the radii of curvature of lens surfaces, and the thicknesses and arrangement intervals of the lenses L1, L2, L3, L4, and L5 in addition to the specifications of Tables 1 and 2 described above, and may have the aspherical coefficients of Table 25 and/or Table 26. In an embodiment, the imaging device 1300 may satisfy at least some of the above-described conditions, such as those of Equation 1.

[Table 24]

| Lens surface | Curvature radius | Thickness (air gap) | Refractive index (nd) | Abbe number (Vd) |
|---|---|---|---|---|
| obj | infinity | infinity | | |
| S1 | 7.160 | 1.510 | 1.497 | 81.0 |
| STOP (S2) | -290.011 | 0.100 | | |
| S3 | 5.561 | 0.895 | 1.615 | 25.0 |
| S4 | 7.436 | 0.419 | | |
| S5 | 12.761 | 1.255 | 1.690 | 18.0 |
| S6 | 9.712 | 0.157 | | |
| S7 | 16.035 | 0.538 | 1.679 | 19.0 |
| S8 | 5.929 | 0.411 | | |
| S9 | 15.345 | 0.360 | 1.567 | 37.4 |
| S10 | 12.018 | 0.300 | | |
| S11 | infinity | 13.000 | 1.550 | 35.1 |
| S12 | infinity | 0.100 | | |
| S13 | infinity | 0.210 | 1.520 | 64.1 |
| S14 | infinity | 2.350 | | |
| Img | infinity | 0.006 | | |

[Table 25]

| Lens surface | 1_ASP | 2_ASP | 3_ASP | 4_ASP | 5_ASP |
|---|---|---|---|---|---|
| Curvature radius | 7.160E+00 | -2.900E+02 | 5.561E+00 | 7.436E+00 | 1.276E+01 |
| k (Conic) | -7.920E-01 | -1.000E+00 | 0.000E+00 | 0.000E+00 | 0.000E+00 |
| A (4th) | -4.700E-05 | -3.462E-04 | 5.924E-04 | 4.569E-04 | 4.450E-05 |
| B (6th) | -4.456E-05 | 3.904E-05 | 1.900E-04 | 1.858E-04 | -5.026E-06 |
| C (8th) | 1.574E-05 | 0.000E+00 | -8.319E-05 | -1.802E-04 | -1.241E-06 |
| D (10th) | -2.064E-06 | 0.000E+00 | 1.830E-05 | 5.227E-05 | -7.850E-08 |
| E (12th) | -3.180E-08 | 0.000E+00 | -2.027E-06 | -8.274E-06 | 8.751E-09 |
| F (14th) | 4.721E-08 | 0.000E+00 | 1.149E-07 | 7.534E-07 | 3.075E-09 |
| G (16th) | -6.377E-09 | 0.000E+00 | -3.207E-09 | -3.885E-08 | 3.819E-10 |
| H (18th) | 4.112E-10 | 0.000E+00 | 3.440E-11 | 1.053E-09 | 2.591E-11 |
| J (20th) | -1.337E-11 | 0.000E+00 | 2.506E-14 | -1.164E-11 | -9.320E-12 |
| K (22nd) | 1.748E-13 | 0.000E+00 | 0.000E+00 | 0.000E+00 | 0.000E+00 |
| L (24th) | 0.000E+00 | 0.000E+00 | 0.000E+00 | 0.000E+00 | 0.000E+00 |
| M (26th) | 0.000E+00 | 0.000E+00 | 0.000E+00 | 0.000E+00 | 0.000E+00 |
| N (28th) | 0.000E+00 | 0.000E+00 | 0.000E+00 | 0.000E+00 | 0.000E+00 |
| O (30th) | 0.000E+00 | 0.000E+00 | 0.000E+00 | 0.000E+00 | 0.000E+00 |

[Table 26]

| Lens surface | 6_ASP | 7_ASP | 8_ASP | 9_ASP | 10_ASP |
|---|---|---|---|---|---|
| Curvature radius | 9.712E+00 | 1.603E+01 | 5.929E+00 | 1.534E+01 | 1.202E+01 |
| k (Conic) | 0.000E+00 | 0.000E+00 | 0.000E+00 | -1.000E+00 | -9.900E+01 |

(continued)

| Lens surface | 6_ASP | 7_ASP | 8_ASP | 9_ASP | 10_ASP |
|---|---|---|---|---|---|
| A (4th) | 1.132E-04 | -2.036E-06 | 1.471E-03 | 2.696E-03 | 1.055E-02 |
| B (6th) | -2.510E-06 | 7.197E-05 | 3.059E-04 | -2.536E-04 | -3.070E-03 |
| C (8th) | -1.539E-07 | 1.375E-05 | 5.946E-05 | -2.727E-04 | 1.103E-03 |
| D (10th) | -1.045E-06 | 2.964E-06 | 9.023E-06 | 1.116E-04 | -5.909E-04 |
| E (12th) | 2.262E-07 | -1.286E-07 | 1.041E-06 | -1.059E-05 | 2.528E-04 |
| F (14th) | 1.775E-08 | -6.080E-08 | 7.434E-08 | -1.910E-06 | -6.889E-05 |
| G (16th) | -2.563E-09 | -1.250E-08 | -5.205E-08 | 5.297E-07 | 1.070E-05 |
| H (18th) | -1.526E-09 | -1.663E-09 | 2.750E-18 | -4.940E-08 | -8.428E-07 |
| J (20th) | -3.818E-10 | -1.076E-10 | 4.419E-20 | 2.123E-09 | 2.278E-08 |
| K (22nd) | 0.000E+00 | 0.000E+00 | 0.000E+00 | -3.538E-11 | 3.535E-10 |
| L (24th) | 0.000E+00 | 0.000E+00 | 0.000E+00 | 0.000E+00 | 0.000E+00 |
| M (26th) | 0.000E+00 | 0.000E+00 | 0.000E+00 | 0.000E+00 | 0.000E+00 |
| N (28th) | 0.000E+00 | 0.000E+00 | 0.000E+00 | 0.000E+00 | 0.000E+00 |
| O (30th) | 0.000E+00 | 0.000E+00 | 0.000E+00 | 0.000E+00 | 0.000E+00 |

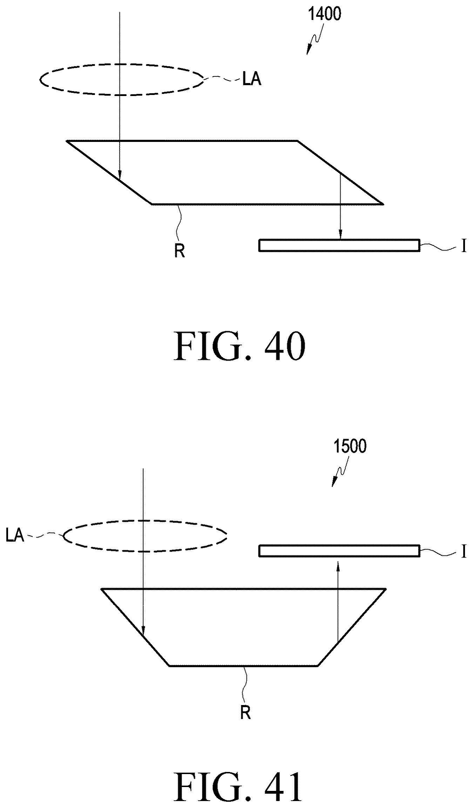

FIG. 40 is a view illustrating an imaging device 1400 according to an embodiment of the disclosure. FIG. 41 is a view illustrating an imaging device 1500 according to an embodiment of the disclosure.

Referring to FIGS. 40 and 41, an optical member R that is disposed between the lens assembly LA and the image sensor I to change the traveling path of light may have a polygonal shape, such as a parallelogram prism shape as in FIG. 40 or a trapezoidal prism shape as in FIG. 41. For example, depending on the position and shape of the optical member R, the position or orientation of the image sensor I with respect to the lens assembly LA may be implemented in various ways. Depending on the shape of the optical member R, light incident on the optical member R through the lens assembly LA may be internally reflected at least once within the optical member R and then emitted to the outside of the optical member R through a surface oriented toward the image sensor I.

An imaging device according to an embodiment of the disclosure (e.g., the camera module 180, 205, 212, or 213 in FIGS. 1 to 3, or the imaging device 500, 600, 700, 800, 900, 1000, 1100, 1200, 1300, 1400, or 1500 in FIGS. 7, 8, 12, 16, 20, 24, 28, 32, 36, 40, and 41) may include an optical member (e.g., the optical member R in FIG. 8) that reflects and/or refracts incident light, so that the design of the light traveling path toward the image sensor (e.g., the image sensor I in FIG. 8) may be flexible. For example, the arrangement direction of the imaging surface (e.g., the imaging surface img in FIG. 8) of the image sensor I may be variously designed with respect to the arrangement of lenses (e.g., lenses L1, L2, L3, and L4 in FIG. 8). Accordingly, an imaging device having high optical performance (e.g., telephoto performance) may be easily mounted in a miniaturized and lightweight electronic device (e.g., the electronic devices 101, 102, 104, 200, 300, or 400 in FIGS. 1 to 6), such as a smartphone. In an embodiment, the imaging device and/or the electronic device including the same may suppress chromatic aberration caused by the optical member through a combination of the refractive powers and materials of lenses, so as to provide good telephoto performance and/or prevent degradation in the quality of an acquired image.

The effects obtainable from the disclosure are not limited to those mentioned above, and other unmentioned effects will be clearly understood by those skilled in the art from the description of the above-described embodiment(s).

According to an embodiment of the disclosure, an imaging device (e.g., the camera modules 180, 205, 212, and 213 of FIGS. 1 to 3, or the imaging devices 500, 600, 700, 800, 900, 1000, 1100, 1200, 1300, 1400, and 1500 of FIGS. 7, 8, 12, 16, 20, 24, 28, 32, 36, 40, and 41) includes a lens assembly (e.g., the lens assembly LA of FIGS. 8, 12, 16, and/or 20) having at least four lenses (e.g., the lenses L1, L2, L3, L4, and L5 of FIGS. 8, 12, 16, and/or 20) sequentially arranged along an optical axis (e.g., the optical axis A of FIGS. 8, 12, 16, and/or 20). The at least four lenses include a first lens (e.g., the first lens L1 of FIGS. 8, 12, 16, and/or 20) disposed first in an incident direction of light and having a positive refractive power, a second lens (e.g., the second lens L2 of FIGS. 8, 12, 16, and/or 20) disposed second in the incident direction of light and having a positive refractive power, a third lens (e.g., the third lens L3 of FIGS. 8, 12, 16, and/or 20) disposed third in the incident direction of light, and a fourth lens (e.g., the fourth lens L4 of FIGS. 8, 12, 16, and/or 20) disposed fourth in the incident direction of light. The imaging device further includes an optical member (e.g., the optical member R of FIGS. 8, 12, 16, and/or 20) configured to guide light focused or guided by the lens assembly in a direction intersecting the optical axis by reflecting the light at least once. In an embodiment, the lens assembly satisfies the following Conditional Expression 1:

[Conditional Expression 1]

$$-0.9 < ((f12 / (V1 + V2) + f34 / (V3 + V4)) / Vp) \times 100 < -0.5$$

Here, "f12" denotes a combined focal length of the first lens and the second lens, "f34" denotes a combined focal length of the third lens and the fourth lens, "V1" denotes an Abbe number of the first lens, "V2" denotes an Abbe number of the second lens, "V3" denotes is an Abbe number of the third lens, "V4" denotes an Abbe number of the fourth lens, and "Vp" denotes an Abbe number of the optical member.

According to various embodiments, the third lens may have a negative refractive power.

According to an embodiment, at least one of the first lens, the second lens, and the third lens may include at least one of a synthetic resin or glass.

According to an embodiment, at least one of the first lens and the second lens may have an Abbe number of 50 or more. In an embodiment, a sum of the Abbe numbers of the first lens and the second lens may be 100 or more.

According to an embodiment, at least one of the third lens and the fourth lens may have an Abbe number of 40 or less.

According to an embodiment, the imaging device described above may further include an image sensor (e.g., the image sensor I of FIGS. 8, 12, 16, and/or 20) configured to receive light guided through the optical member.

According to an embodiment, the imaging device described above may further include an infrared cut filter (e.g., the infrared cut filter F of FIGS. 8, 12, 16, and/or 20) disposed between the optical member and the image sensor.

According to an embodiment, the image sensor may be configured to perform the focus adjustment operation by moving forward and backward in a direction in which light is incident on an imaging plane of the image sensor, or to perform an optical image stabilization operation by moving in a plane perpendicular to the direction in which light is incident on the imaging plane.

According to an embodiment, the imaging device described above may satisfy the following Conditional Expression 2:

[Conditional Expression 2]

$$15 < FOV < 35$$

Here, "FOV" may be a field of view of the lens assembly, and a unit of the FOV may be degree.

According to an embodiment, the imaging device described above may be configured to perform an optical image stabilization operation or a subject tracking operation by rotating or tilting the optical member.

According to an embodiment, the imaging device described above may further include a second optical member disposed in front of the first lens and configured to receive light incident in a direction intersecting the optical axis and to guide the light to the first lens along the optical axis.

According to an embodiment, the second optical member may be configured to internally reflect the incident light at least once.

According to an embodiment, the imaging device described above may be configured to perform an optical image stabilization operation or a subject tracking operation by rotating or tilting the second optical member.

According to an embodiment of the disclosure, an electronic device (e.g., the electronic devices 101, 102, 104, 200, 300, and 400 of FIGS. 1 to 6) includes an imaging device (e.g., the camera modules 180, 205, 212, and 213 of FIGS. 1 to 3, or the imaging devices 500, 600, 700, 800, 900, 1000, 1100, 1200, 1300, 1400, and 1500 of FIGS. 7, 8, 12, 16, 20, 24, 28, 32, 36, 40, and 41) including a lens assembly (e.g., the lens assembly LA of FIGS. 8, 12, 16, and/or 20) that includes at least four lenses (e.g., the lenses L1, L2, L3, L4, and L5 of FIGS. 8, 12, 16, and/or 20) sequentially arranged along an optical axis (e.g., the optical axis A of FIGS. 8, 12, 16, and/or 20), and an optical member (e.g., the optical member R of FIGS. 8, 12, 16, and/or 20) configured to guide light, which is focused or guided by the lens assembly, in a direction intersecting the optical axis by reflecting the light at least once. The electronic device further includes a processor (e.g., the processor 120 of FIG. 1) configured to acquire a subject image using the imaging device. In an embodiment, the at least four lenses include a first lens (e.g., the first lens L1 of FIGS. 8, 12, 16, and/or 20) disposed first in an incident direction of light and having a positive refractive power, a second lens (e.g., the second lens L2 of FIGS. 8, 12, 16, and/or 20) disposed second in the incident direction of light and having a positive refractive power, a third lens (e.g., the third lens L3 of FIGS. 8, 12, 16, and/or 20) disposed third in the incident direction of light and having a negative refractive power, and a fourth lens (e.g., the fourth lens L4 of FIGS. 8, 12, 16, and/or 20) disposed fourth in the incident direction of light. In an embodiment, the lens assembly satisfies the following Conditional Expression 1:

[Conditional Expression 1]

$$-0.9 < ((f12 / (V1 + V2) + f34 / (V3 + V4)) / Vp) \times 100 < -0.5$$

Here, "f12" denotes a combined focal length of the first lens and the second lens, "f34" denotes a combined focal length of the third lens and the fourth lens, "V1" denotes an Abbe number of the first lens, "V2" denotes an Abbe number of the second lens, "V3" denotes is an Abbe number of the third lens, "V4" denotes an Abbe number of the fourth lens, and "Vp" denotes an Abbe number of the optical member.

According to an embodiment, at least one of the first lens, the second lens, and the third lens may include at least one of a synthetic resin or glass.

According to an embodiment, the first lens and the second lens may have an Abbe number of 50 or more.

According to an embodiment, the third lens and the fourth lens may have an Abbe number of 40 or less.

According to an embodiment, the imaging device may further include an image sensor (e.g., the image sensor I of FIGS. 8, 12, 16, and/or 20) configured to receive light guided through the optical member. In an embodiment, the processor may be configured to acquire a subject image based on light received through the image sensor.

According to an embodiment, the imaging device may further include an infrared cut filter (e.g., the infrared cut filter F of FIGS. 8, 12, 16, and/or 20) disposed between the optical member and the image sensor.

According to an embodiment, the processor may be configured to perform a focus adjustment operation by moving the image sensor forward and backward in a direction in which light is incident on an imaging plane of the image sensor, or to perform an optical image stabilization operation by moving the image sensor in a plane perpendicular to the direction in which light is incident on the imaging plane.

According to an embodiment, the lens assembly may satisfy the following Conditional Expression 2:

[Conditional Expression 2]

$$15 < FOV < 35$$

Here, "FOV" is a field of view of the lens assembly, and a unit of the FOV is degree.

According to an embodiment, the processor is configured to perform an optical image stabilization operation or a subject tracking operation by rotating or tilting the optical member.

Although an embodiment of the disclosure has been illustrated and described, it should be appreciated that the embodiment does not limit the disclosure, but is provided for the sake of illustration. It will be apparent to those skilled in the art that various changes may be made to the form and details of the disclosure without departing from the overall perspective of the disclosure including the appended claims and equivalents thereof.

**Claims**

1.   An imaging device (180; 205; 212; 213; 500; 600; 700; 800; 900; 1000; 1100; 1200; 1300; 1400; 1500) comprising:

a lens assembly comprising at least four lenses (L1, L2, L3, L4, L5) sequentially arranged along an optical axis (A), wherein the at least four lenses comprise a first lens (L1) disposed first in an incident direction of light and having a positive refractive power, a second lens (L2) disposed second in the incident direction of light and having a positive refractive power, a third lens (L3) disposed third in the incident direction of light, and a fourth lens (L4) disposed fourth in the incident direction of light; and
an optical member (R) configured to guide light focused or guided by the lens assembly in a direction intersecting the optical axis by reflecting the light at least once,
wherein the lens assembly satisfies Conditional Expression 1 below:

[Conditional Expression 1]

$$-0.9 < ((f12 / (V1 + V2) + f34 / (V3 + V4)) / Vp) \times 100 < -0.5,$$

where "f12" denotes a combined focal length of the first lens and the second lens, "f34" denotes a combined focal length of the third lens and the fourth lens, "V1" denotes an Abbe number of the first lens, "V2" denotes an Abbe number of the second lens, "V3" denotes an Abbe number of the third lens, "V4" denotes an Abbe number of the fourth lens, and "Vp" denotes an Abbe number of the optical member.

2. The imaging device of claim 1, wherein the third lens has a negative refractive power.

3. The imaging device of claim 1 or 2, wherein at least one of the first lens, the second lens, and the third lens comprises at least one of a synthetic resin and glass.

4. The imaging device of any one of claims 1 to 3, wherein at least one of the first lens and the second lens has an Abbe number of 50 or more, and
a sum of the Abbe numbers of the first lens and the second lens is 100 or more.

5. The imaging device of any one of claims 1 to 4, wherein at least one of the third lens and the fourth lens has an Abbe number of 40 or less.

6. The imaging device of any one of claims 1 to 5, further comprising:
an image sensor (I) configured to receive light guided through the optical member.

7. The imaging device of claim 6, further comprising:
an infrared cut filter (F) disposed between the optical member and the image sensor.

8. The imaging device of any one of claims 6 to 7, wherein the image sensor is configured to:

perform a focus adjustment operation by moving forward and backward in a direction in which light is incident on an imaging plane of the image sensor; or
perform an optical image stabilization operation by moving in a plane perpendicular to the direction in which light is incident on the imaging plane.

9. The imaging device of any one of claims 1 to 8, wherein the imaging device satisfies Conditional Expression 2 below:

[Conditional Expression 2]

$$15 < FOV < 35,$$

where "FOV" is a field of view of the lens assembly, and a unit of the FOV is degree.

10. The imaging device of any one of claims 1 to 9, wherein the imaging device is configured to perform an optical image stabilization operation or a subject tracking operation by rotating or tilting the optical member.

11. The imaging device of any one of claims 1 to 10, further comprising:
a second optical member disposed in front of the first lens and configured to receive light incident in a direction intersecting the optical axis and to guide the light to the first lens along the optical axis.

12. The imaging device of claim 11, wherein the second optical member is configured to internally reflect the incident light at least once.

13. An electronic device (101; 102; 104; 200; 300; 400) comprising:

the imaging device (180; 205; 212; 213; 500; 600; 700; 800; 900; 1000; 1100; 1200; 1300; 1400; 1500) according to any one of claims 1 to 12; and
a processor (120) configured to acquire a subject image using the imaging device.

14. The electronic device of claim 13, wherein the processor is configured to acquire the subject image based on light received through the image sensor of the imaging device.

15. The electronic device of any one of claims 13 to 14, wherein the processor is configured to perform the focus adjustment operation or the optical image stabilization operation by moving the image sensor of the imaging device.

FIG. 1

EP 4 711 845 A1

# FIG. 2

FIG. 3

EP 4 711 845 A1

FIG. 4

39

FIG. 5

FIG. 6

FIG. 7

FIG. 8

LONGITUDINAL SPHERICAL ABER.

FIG. 9

ASTIGMATIC FIELD CURVES

IMG HT

T S

3.50

2.63

1.75

0.88

-0.200 -0.100 0.0 0.100 0.200

FOCUS (mm)

# FIG. 10

DISTORTION

IMG HT

3.50

2.63

1.75

0.88

-5.0 -2.5 0.0 2.5 5.0

DISTORTION (%)

# FIG. 11

FIG. 12

LONGITUDINAL SPHERICAL ABER.

FIG. 13

ASTIGMATIC FIELD CURVES
IMG HT

T    S

3.50

2.63

1.75

0.88

-0.200  -0.100  0.0  0.100  0.200
FOCUS (mm)

FIG. 14

DISTORTION
IMG HT

3.50

2.63

1.75

0.88

-5.0  -2.5  0.0  2.5  5.0
DISTORTION (%)

FIG. 15

FIG. 16

LONGITUDINAL SPHERICAL ABER.

FIG. 17

FIG. 18

FIG. 19

FIG. 20

LONGITUDINAL SPHERICAL ABER.

FIG. 21

FIG. 22

FIG. 23

FIG. 24

LONGITUDINAL SPHERICAL ABER.

FIG. 25

ASTIGMATIC FIELD CURVES

IMG HT

T S

3.50

2.63

1.75

0.88

-0.200 -0.100 0.0 0.100 0.200

FOCUS (mm)

## FIG. 26

DISTORTION

IMG HT

3.50

2.63

1.75

0.88

-5.0 -2.5 0.0 2.5 5.0

DISTORTION (%)

## FIG. 27

FIG. 28

LONGITUDINAL SPHERICAL ABER.

| | 656.3000 NM |
|---|---|
| | 587.6000 NM |
| | 546.1000 NM |
| | 486.1000 NM |
| | 435.8000 NM |

FOCUS (mm)

FIG. 29

ASTIGMATIC FIELD CURVES

IMG HT

T S

3.50

2.63

1.75

0.88

-0.200 -0.100 0.0 0.100 0.200

FOCUS (mm)

## FIG. 30

DISTORTION

IMG HT

3.50

2.63

1.75

0.88

-5.0 -2.5 0.0 2.5 5.0

DISTORTION (%)

## FIG. 31

FIG. 32

LONGITUDINAL SPHERICAL ABER.

| | 656.3000 NM |
| | 587.6000 NM |
| | 546.1000 NM |
| | 486.1000 NM |
| | 435.8000 NM |

FOCUS (mm)

# FIG. 33

FIG. 34

FIG. 35

FIG. 36

LONGITUDINAL SPHERICAL ABER.

FIG. 37

ASTIGMATIC FIELD CURVES

IMG HT

DISTORTION

IMG HT

FIG. 38

FIG. 39

FIG. 40

FIG. 41

## INTERNATIONAL SEARCH REPORT

| | International application No. |
| --- | --- |
| | **PCT/KR2024/006485** |

| A. | CLASSIFICATION OF SUBJECT MATTER |
| --- | --- |

G03B 17/12(2006.01)i; G03B 5/06(2006.01)i; G03B 13/36(2006.01)i; G03B 11/00(2006.01)i; H04N 23/55(2023.01)i; H04N 23/68(2023.01)i; H04N 23/67(2023.01)i; G02B 13/00(2006.01)i; G02B 5/20(2006.01)i

According to International Patent Classification (IPC) or to both national classification and IPC

| B. | FIELDS SEARCHED |
| --- | --- |

Minimum documentation searched (classification system followed by classification symbols)

G03B 17/12(2006.01); G02B 13/02(2006.01); G02B 27/10(2006.01); G02B 3/00(2006.01); G02B 5/04(2006.01); G02B 7/02(2006.01); H04N 23/60(2023.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 어셈블리(lens assembly), 광축(optical axis), 입사 방향(incident direction), 굴절력(refractive power), 아베수(abbe number)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-189426 A (AAC OPTICS (CHANGZHOU) CO., LTD.) 13 December 2021 (2021-12-13)<br>See paragraph [0018]; claim 1; and figure 1. | 1-15 |
| A | KR 10-2022-0155163 A (LG INNOTEK CO., LTD.) 22 November 2022 (2022-11-22)<br>See paragraphs [0030]-[0031], [0033]-[0035], [0037]-[0040] and [0042]-[0046]; and figures 1-3. | 1-15 |
| A | KR 10-2016-0121298 A (SAMSUNG ELECTRO-MECHANICS CO., LTD.) 19 October 2016 (2016-10-19)<br>See paragraphs [0020]-[0032]; and figure 3. | 1-15 |
| A | KR 10-2021-0100429 A (LG INNOTEK CO., LTD.) 17 August 2021 (2021-08-17)<br>See paragraphs [0038]-[0072]; and figure 3. | 1-15 |
| A | KR 10-2020-0143920 A (LG INNOTEK CO., LTD.) 28 December 2020 (2020-12-28)<br>See paragraphs [0043]-[0072], [0074] and [0076]-[0095]; and figure 2. | 1-15 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 August 2024** | **20 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006485**

| Patent document cited in search report | | | Publication date (day/month/year) | Patent family member(s) | | | Publication date (day/month/year) |
|---|---|---|---|---|---|---|---|
| JP | 2021-189426 | A | 13 December 2021 | CN | 111367060 | A | 03 July 2020 |
| | | | | CN | 111367060 | B | 21 August 2020 |
| | | | | CN | 111368008 | A | 03 July 2020 |
| | | | | CN | 111368008 | B | 25 August 2020 |
| | | | | EP | 4030314 | A1 | 20 July 2022 |
| | | | | JP | 2023-508210 | A | 01 March 2023 |
| | | | | JP | 7072629 | B2 | 20 May 2022 |
| | | | | JP | 7325894 | B2 | 15 August 2023 |
| | | | | KR | 10-2022-0074971 | A | 03 June 2022 |
| | | | | US | 11914579 | B2 | 27 February 2024 |
| | | | | US | 2021-0373285 | A1 | 02 December 2021 |
| | | | | US | 2022-0253432 | A1 | 11 August 2022 |
| | | | | WO | 2021-237781 | A1 | 02 December 2021 |
| | | | | WO | 2021-238514 | A1 | 02 December 2021 |
| KR | 10-2022-0155163 | A | 22 November 2022 | CN | 117321465 | A | 29 December 2023 |
| | | | | EP | 4339677 | A1 | 20 March 2024 |
| | | | | JP | 2024-518831 | A | 07 May 2024 |
| | | | | KR | 10-2023-0027993 | A | 28 February 2023 |
| | | | | KR | 10-2023-0094061 | A | 27 June 2023 |
| | | | | WO | 2022-240222 | A1 | 17 November 2022 |
| KR | 10-2016-0121298 | A | 19 October 2016 | CN | 106054494 | A | 26 October 2016 |
| | | | | KR | 10-2494346 | B1 | 01 February 2023 |
| | | | | US | 2016-0299349 | A1 | 13 October 2016 |
| KR | 10-2021-0100429 | A | 17 August 2021 | CN | 115053154 | A | 13 September 2022 |
| | | | | EP | 4102267 | A1 | 14 December 2022 |
| | | | | EP | 4102267 | A4 | 06 March 2024 |
| | | | | US | 2023-0072601 | A1 | 09 March 2023 |
| | | | | WO | 2021-158033 | A1 | 12 August 2021 |
| KR | 10-2020-0143920 | A | 28 December 2020 | None | | | |

Form PCT/ISA/210 (patent family annex) (July 2022)